# EUROPÄISCHE PATENTSCHRIFT

(11) **EP 4 184 035 B1**
(45) Veröffentlichungstag und Bekanntmachung des Hinweises auf die Patenterteilung: **11.09.2024**
(21) Anmeldenummer: 22202184.2
(22) Anmeldetag: 18.10.2022
(51) Int. Cl.: F16H 7/08

(54) **SPANNVORRICHTUNG FÜR EINEN ZUGMITTELANTRIEB**
TENSIONING DEVICE FOR A TRACTION MECHANISM DRIVE
DISPOSITIF DE SERRAGE POUR UN ENTRAÎNEMENT DE MOYEN DE TRACTION

(30) Priorität: 17.11.2021 DE 102021129970
(43) Veröffentlichungstag der Anmeldung: 24.05.2023
(73) Patentinhaber: KRONES Aktiengesellschaft, 93073 Neutraubling (DE)
(72) Erfinder: WIMMER, Thomas, 93073 Neutraubling (DE)
(74) Vertreter: Benninger, Johannes

(56) Entgegenhaltungen:
- DE-A1- 102015 214 746
- DE-C- 686 129
- DE-U1- 20 020 350
- US-A- 2 717 520

## Beschreibung

Die vorliegende Erfindung betrifft eine Spannvorrichtung für einen umlaufenden Zugmittelantrieb mit den Merkmalen des unabhängigen Anspruchs 1 sowie eine Getränkeabfüll- und/oder Verpackungsmaschine, die wenigstens einen umlaufenden Zugmittelantrieb mit mindestens einem über Umlenkungen geführten Zugmittel für eine Förder- oder Antriebseinheit innerhalb der Abfüll- und/oder Verpackungsmaschine umfasst.

Eine Spannvorrichtung ist aus der DE686129C bekannt. Bei Zugmittelantrieben werden rotierende Bewegungen zwischen voneinander entfernten Wellen mittels umlaufender Zugmittel wie Riemen oder Gliederketten übertragen. Während das kraftübertragende Zugtrum oder Lasttrum eines solchen Zugmittelantriebs aufgrund der dort in aller Regel stetig anliegenden Zugkräfte gespannt bleibt, ist dies im lastfreien Leertrum, das den rücklaufenden Abschnitt des umlaufenden Zugmittels bezeichnet, nicht zuverlässig zu gewährleisten, so dass dort zur Verhinderung eines zu großen Durchhanges und damit möglicherweise einhergehender unkontrollierter Querbewegungen und Schwingungen des Zugmittels im Leertrum geeignete Spanneinrichtungen eingesetzt werden.

Solche Spanneinrichtungen können in einfachen Bauausführungen durch federbelastete Spannrollen gebildet sein, die bedarfsweise mit geeigneten Dämpfungselementen ausgestattet sein können, die in der Lage sind, Schwingungen und auftretende Resonanzeffekte zu unterdrücken.

Sofern es sich nicht um hydraulisch vorgespannte oder mit Federelementen ausgestattete und solchermaßen andrückbare Kettenspanner handelt, ist in der Regel eine wiederholte Einstellung der Kettenspannung mittels eines im Leertrum des Zugmittelantriebes befindlichen und manuell in seiner Position verstellbaren Kettenspannelementes notwendig, da die meisten Zugmittel nach längerer Betriebsdauer einem Verschleiß und einer gewissen Längung unterliegen.

Ob es sich um Hebelspanner handelt, um federbelastete Spannelemente oder um hydraulisch unterstützte Spanneinrichtungen mit Dämpfern, ist den meisten bekannten Spanneinrichtungen gemeinsam, dass sie relativ voluminös sind und deshalb einen großen Einbauraum benötigen.

Als Ziel der Erfindung kann es deshalb betrachtet werden, eine einfach aufgebaute, mit wenig Aufwand einstellbare und dabei möglichst kompakt bauende Spannvorrichtung für einen umlaufenden Zugmittelantrieb einer Förder- oder Antriebseinheit innerhalb einer Maschinenumgebung zur Verfügung zu stellen. Ein weiteres Ziel der Erfindung besteht darin, eine Getränkeabfüll- und/oder Verpackungsmaschine zur Verfügung zu stellen, die wenigstens einen umlaufenden Zugmittelantrieb für eine Förder- oder Antriebseinheit innerhalb der Abfüll- und/oder Verpackungsmaschine umfasst, wobei dieser Zugmittelantrieb mit einer derartigen kompakten Spannvorrichtung ausgestattet sein sollte.

Die obigen Ziele werden mit den Gegenständen der unabhängigen Ansprüche erreicht. Weitere vorteilhafte Ausgestaltungen werden durch die jeweiligen abhängigen Ansprüche beschrieben.

Zur Erreichung eines der oben genannten Ziele schlägt die vorliegende Erfindung eine Spannvorrichtung für einen umlaufenden Zugmittelantrieb mit mindestens einem über Umlenkungen geführten Zugmittel mit den Merkmalen des unabhängigen Anspruchs 1 vor, wobei der Zugmittelantrieb insbesondere durch einen Ketten- oder Riemenantrieb gebildet sein kann. Zudem ist der Zugmittelantrieb vorzugsweise ein Bestandteil oder eine Antriebs- oder Getriebekomponente einer Förder- oder Antriebseinheit innerhalb einer Maschinenumgebung, insbesondere einer Produktionsmaschine, einer Förder- oder Handhabungsmaschine, die bspw. auch durch eine Abfüll- und/oder Verpackungsmaschine gebildet sein kann.

Die erfindungsgemäße Spannvorrichtung umfasst eine an einem ortsfesten Rahmenteil oder sonstigen Bauteil der Maschine im Bereich eines Leertrumabschnittes des umlaufenden Zugmittels verankerte Nabe, an der ein elastisch nachgiebiger Gleitabschnitt hebelartig befestigt ist, der mit dem Zugmittel in dessen Leertrum zusammenwirkt und dieses zwischen zwei Umlenkungen vorspannt.

Bei vielen der bekannten Ketten- oder Riemenspanner fehlen flexibel nachgiebige Bereiche, die eine zu hohe Spannung des Zugmittels im Betrieb zuverlässig verhindern. Eine zu stark gespannte Kette oder ein zu stark gespannter Riemen belastet jedoch die Lager der Umlenkwellen relativ stark. Zudem werden dadurch auch auf die Wellen relativ hohe Biegekräfte ausgeübt, die im ungünstigsten Fall zu einer Beschädigung oder gar zu einem Versagen der Wellen führen können.

Demgegenüber bietet die erfindungsgemäße Spannvorrichtung, die grundsätzlich für die unterschiedlichsten Zugmittelantriebe in zahlreichen Maschinenumgebungen geeignet und einsetzbar sind, eine sehr einfach justierbare, dabei sehr kompakt bauende und zuverlässig funktionierende Variante mit nur wenigen Bauteilen, die auf einfache Weise verhindern lassen, das Zugmittel im Leertrum mit einer zu hohen Spannkraft zu beaufschlagen, was es jedem damit befassten Monteur sehr leicht macht, den jeweils notwendigen Wert für die Zugmittelspannung einzustellen und bedarfsweise erneut zu justieren, wenn sich das Zugmittel z.B. nach längerer Betriebsdauer gelängt hat oder die Umlenkräder einem Verschleiß unterliegen.

Eine definierte Zugspannung des Zugmittels lässt sich durch eine Zusammenwirkung mehrerer elastischer Elemente erreichen, die nachfolgend näher beschrieben werden. Zudem kann dadurch ein wirksamer Überlastschutz zur Verfügung gestellt werden, die eine Überlastung der Übertragungselemente des Zugmittelantriebes zuverlässig verhindert.

Die gekrümmte Kontur des Auslegers erlaubt die Variation der Vorspannung des Zugmittels durch eine Verdrehung der Nabe vor deren Fixierung am rahmenfesten Maschinenteil, vorzugsweise durch Verdrehung der Nabe um einen festen Drehpunkt. Der Ausleger kann die Gestalt eines Halbmondes aufweisen und einerseits durch die eingestellte Position der Nabe und andererseits durch seine flexible Gestaltung für eine fein justierbare Vorspannung des Leertrums des Zugmittels sorgen.

Der an der Nabe verankerte und mit der Nabe verbundene Ausleger der Spannvorrichtung kann insbesondere durch ein elastisch verformbares Material gebildet oder gefertigt sein, z.B. aus einem geeigneten Kunststoffmaterial, das sich elastisch verformen kann.

Besonders vorteilhaft und kostengünstig lässt sich die Spannvorrichtung herstellen, wenn der Ausleger einstückig mit der Nabe verbunden oder ein stofflich integraler Bestandteil der Nabe ist.

Wahlweise kann das Abstützelement einen U-förmigen federnden Abschnitt aufweisen, an dem sich der Ausleger abstützt.

Darüber hinaus kann dem Abstützelemente wahlweise eine optische Anzeige zugeordnet sein, welche den jeweiligen Verformungsgrad des Auslegers und/oder des Abstützelementes gegenüber der am ortsfesten Bauteil verankerten Nabe anzeigt und ablesen lässt.

Eine weitere Ausstattungsoption kann ein in der Nabe integriertes und vorzugsweise mit dem Abstützelement zusammenwirkendes Sensorelement umfassen, mit dem eine Vorspannung des Zugmittels gemessen und im laufenden Betrieb des Zugmittelantriebes überwacht werden kann. Ein solches Sensorelement kann bspw. durch ein kapazitives Dehnmesselement, durch einen Hall-Geber oder durch ein anderes Sensorbauteil gebildet sein, das seine elektrischen Ausgangssignale an eine geeignete Auswerte- und/oder Anzeigeeinheit liefert, so dass der Betriebszustand der Maschine und ihres Zugmittelgetriebes jederzeit überwacht und Abweichungen von einem Soll-Zustand erkannt und gemeldet werden können.

Zur Erreichung der oben genannten Ziele schlägt die Erfindung weiterhin eine Getränkeabfüll- und/oder Verpackungsmaschine vor, die wenigstens einen umlaufenden Zugmittelantrieb mit mindestens einem über Umlenkungen geführten Zugmittel, insbesondere einen Ketten- oder Riemenantrieb für eine Förder- oder Antriebseinheit innerhalb der Abfüll- und/oder Verpackungsmaschine umfasst. Diesem Zugmittelantrieb ist in einem zwischen zwei Umlenkungen verlaufenden Leertrumabschnitt des umlaufenden Zugmittels mindestens eine Spannvorrichtung zugeordnet, die eine an einem ortsfesten (Rahmen-)Bauteil der Verpackungsmaschine verankerte Nabe umfasst, an der ein elastisch nachgiebiger Gleitabschnitt hebelartig befestigt ist, der mit dem Zugmittel in dessen Leertrum zusammenwirkt und dieses zwischen den zwei Umlenkungen vorspannt.

Vorzugsweise ist diese Maschine mit einer Spannvorrichtung gemäß einer der oben beschriebenen Ausführungsvarianten ausgestattet, die einem Leertrum eines umlaufenden Zugmittels eines Zugmittelantriebes zugeordnet ist.

Mit der erfindungsgemäßen Spannvorrichtung kann in einem umlaufenden Zugmittelantrieb für die Sicherstellung und Aufrechterhaltung einer ausreichenden Vorspannung eines über mehrere Umlenkungen geführten Zugmittels gesorgt werden. Der mit der erfindungsgemäßen Spannvorrichtung ausgestattete und hier nur ganz allgemein beschriebene Zugmittelantrieb kann insbesondere durch einen Ketten- oder Riemenantrieb gebildet sein. Typischerweise kann ein solcher Zugmittelantrieb ein Bestandteil oder eine Antriebskomponente einer Förder- oder Antriebseinheit innerhalb einer Maschinenumgebung sein, insbesondere einer Produktions-, Förder- oder Handhabungsmaschine, womit beispielsweise auch eine Getränkeabfüll- und/oder Verpackungsmaschine gemeint sein kann.

Das Zugmittel, das bspw. durch eine endlos umlaufende geschlossene Rollenkette gebildet sein kann, kann über mindestens zwei umlenkende Rollen oder Zahnräder geführt sein, deren rotierende Wellen parallel zueinander angeordnet und innerhalb der jeweiligen Maschinenumgebung gelagert sind, wobei die Zahnräder oder Umlenkrollen derart miteinander fluchten, dass die das Zugmittel bildende Rollenkette weitgehend ohne Schräglauf auf den Zahnrädern oder den Umlenkrollen geführt ist. Eine der Wellen mit dem darauf drehfest angeordneten Zahnrad kann dabei eine Antriebswelle sein, während die andere Welle als Abtriebswelle sowie als nicht angetriebene Lagerwelle für das zweite Zahnrad dienen kann.

Das der Antriebsübertragung dienende Zugmittel weist ein Zugtrum oder ein Lasttrum auf, womit der Abschnitt des Zugmittels gemeint ist, der sich zwischen dem Antriebszahnrad und dem nicht angetriebenen Zahnrad befindet, wobei sich das Zugtrum ziehend vom nicht angetriebenen zum angetriebenen Rad bewegt. Das Zugtrum oder Lasttrum eignet sich daher nicht für die Positionierung einer Spannvorrichtung. Neben dem Zugtrum weist das Zugmittel ein Leertrum auf, womit der rücklaufende Abschnitt des Zugmittels zwischen nicht angetriebenem Zahnrad und Antriebszahnrad gemeint ist, der sich in Richtung des nicht angetriebenen Zahnrades bewegt.

Da sich eine Rollenkette, wie sie bspw. als Zugmittel im Zugmittelantrieb eingesetzt wird, aufgrund ihrer Teilung, die durch die Rollenglieder vorgegeben ist, oftmals nicht exakt gespannt einbauen lässt und somit meist im Leertrum einen gewissen Durchhang aufweist, kann es sinnvoll sein, im Leertrum eine geeignete Spannvorrichtung einzubauen, die zudem für einen Ausgleich einer sich verschleißbedingt allmählich längenden Rollenkette sorgen kann. Zudem kann die Spannvorrichtung eine wichtige Funktion für einen ruhigen Lauf des Zugmittels erfüllen, indem sie ein Schlagen im Leertrum und einen damit verbundenen unruhigen Lauf sowie eine damit einhergehende unerwünschte Geräuschentwicklung reduzieren oder weitgehend verhindern kann.

Um ihre Aufgabe in der gewünschten Weise erfüllen zu können, ist die erfindungsgemäße Spannvorrichtung demzufolge an einem ortsfesten Rahmenabschnitt oder Rahmenbauteil der Maschinenumgebung oder der Verpackungsmaschine im Bereich eines hierfür geeigneten und ausreichenden Einbauraum bietenden Bereiches des umlaufenden Zugmittels positioniert, in welchem das Leertrum verläuft.

Wie oben schon erläutert, umfasst die Spannvorrichtung eine an der Maschine oder an dem Rahmenabschnitt der Maschinenumgebung verankerte Nabe, an der ein elastisch nachgiebiger Gleitabschnitt hebelartig befestigt ist, wobei die Nabe zwar grundsätzlich eine Drehbarkeit bietet, diese aber nach Zustellung des hebelartigen Gleitabschnittes an das Leertrum des Zugmittels durch Fixierung der Nabe beseitigt wird, so dass sich die Nabe gegenüber der Verankerung am Rahmenabschnitt nicht mehr verdrehen kann, sobald die Spannung des Zugmittels im Leertrum justiert wurde.

Aufgrund seiner elastischen Nachgiebigkeit kann der hebelartige Gleitabschnitt gegen das Zugmittel in dessen Leertrum zugestellt werden und solchermaßen auf das Leertrum einwirken, dass dieses zwischen seinen beiden Umlenkungen, d.h. zwischen den umlaufenden Zahnrädern vorspannt wird. Bei umlaufendem Zugmittel und dementsprechend eine rückstellende Kraft auf die Spannvorrichtung ausübendem Leertrum kann sich der hebelartige Gleitabschnitt aufgrund seiner elastischen Eigenschaften definiert verformen und zumindest geringfügig zur Außenseite des Zugmittels ausweichen.

Der hier so bezeichnete Gleitabschnitt kann insbesondere durch einen konvex gekrümmten Ausleger gebildet sein oder einen solchen Ausleger aufweisen, der an der Nabe verankert und insbesondere einstückig mit der Nabe ausgebildet ist und dessen konvex gekrümmte Seite dem Leertrum des Zugmittels zugewandt ist und dort anliegt, so dass die das Zugmittel bildende Kette oder der das Zugmittel bildende umlaufende Riemen dort aufliegt und entlanggleiten kann.

In der Praxis kann der Ausleger des Gleitabschnittes durch ein elastisch in gewünschtem Ausmaß verformbares Material gebildet sein, z.B. aus einem Kunststoffmaterial, das sich elastisch in der benötigten Weise verformen kann.

Wie oben erwähnt, kann an der Nabe, insbesondere an einem Grundkörper der Nabe der elastisch nachgiebige Gleitabschnitt einseitig befestigt sein, so dass der hebelartige gekrümmte Ausleger sich an das Leertrum des Zugmittels anlegen und mit dem Zugmittelantrieb in der gewünschten Weise zusammenwirken kann, dass das Zugmittel die notwendige Spannung erhält, und dass ein unerwünschter Durchhang im Leertrum beseitigt wird.

Der Gleitabschnitt kann bspw. durch einen etwa ein Kreisbogensegment von knapp 180° abdeckenden, in Richtung zum Leertrum des Zugmittels konvex gekrümmten Ausleger gebildet sein, dessen am Zugmittel anliegende Gleitoberfläche wahlweise mit einer geeigneten nutartigen Konturierung ausgestattet sein kann, die bspw. mit einer Dimensionierung einer das Zugmittel bildenden Rollenkette korrespondieren kann.

Ein weiteres sinnvolles Funktionselement, das die Verformungsparameter des elastisch nachgiebigen Auslegers und damit die elastischen Eigenschaften der gesamten Spannvorrichtung beeinflussen kann, kann durch ein abstützendes Federblech gebildet sein, das in der nachfolgend beschriebenen Weise mit dem Ausleger zusammenwirkt. Das an der Nabe verankerte Abstützelement, gebildet insbesondere durch ein Federblech, kann bspw. einen U-förmigen Bügel aufweisen, der über den Grundkörper der Nabe hinausreicht, so dass er gegenüber der Nabe in gewissem Maße elastisch verformbar ist, und zwar in definierter Zusammenwirkung mit dem elastisch verformbaren Ausleger des Gleitabschnittes.

Die Wirkungsweise des durch ein solches Federblech gebildeten Abstützelementes ist so zu verstehen, dass mit seiner Montage die Elastizität des Gleitabschnittes der Spannvorrichtung präzise eingestellt und durch Gestaltung des Federblechs in gewünschter Weise variiert werden kann. Im nicht verformten Zustand des bogenförmig gekrümmten Auslegers und im nicht verformten Zustand des Federblechs kontaktiert der Ausleger den Bügel des Federblechs, so dass jede Verformung des Auslegers aufgrund eines gegen die Gleitoberfläche drückenden Zugmittels unmittelbar zu einer elastischen Verformung des Bügels des Federblechs führt und sich über dessen Gestaltung in die Nabe überträgt.

Die elastischen Eigenschaften des Federblechs und damit der gesamten Spannvorrichtung lassen sich durch die verwendete Blechstärke, die Biegsamkeit des verwendeten Blechmaterials sowie zusätzlich durch weitere Maßnahmen beeinflussen, bspw. durch gezielt eingebrachte Nuten, die eine Verformbarkeit erleichtern.

Geeignete Federbleche, die auch nach längerer Betriebsdauer ihre elastischen Eigenschaften und ihre Steifigkeit nicht verlieren, stehen dem über entsprechende Materialkenntnisse verfügenden Fachmann zur Verfügung. Der Fachmann weiß auch, dass er alternative Materialen für das Federblech verwenden kann, etwa dünne CfK-Streifen, welche die gewünschten Festigkeits- und Elastizitätsparameter aufweisen.

Die optische Anzeige der Verformung des Federblechs wird durch den im Einbau innerhalb des Zugmittelantriebes durch das Leertrum in Verformungsrichtung gedrückten Ausleger des Gleitabschnittes ausgelöst. Zu diesem Zweck kann sich an geeigneter Stelle des Bügels ein passend geformtes Zeigerelement befinden, das bspw. mit seiner Spitze auf eine Strichmarkierung weisen kann, die sich an einer seitlichen Oberfläche des Grundkörpers der Nabe befindet.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, die erfindungsgemäße Spannvorrichtung insbesondere ein Bestandteil eines Zugmittelantriebes innerhalb einer Getränkeabfüll- und/oder Verpackungsmaschine o. dgl. Verarbeitungsmaschine sein.

Die hier erläuterte Spannvorrichtung kann vorzugsweise dafür dienen, um in einem umlaufenden Zugmittelantrieb für die Sicherstellung und Aufrechterhaltung einer ausreichenden Vorspannung eines über mehrere Umlenkungen geführten Zugmittels zu sorgen. Dieser Zugmittelantrieb kann insbesondere durch einen Ketten- oder Riemenantrieb gebildet sein. Typischerweise kann ein solcher Zugmittelantrieb ein Bestandteil oder eine Antriebskomponente einer Förder- oder Antriebseinheit innerhalb einer Maschinenumgebung sein, insbesondere einer Produktions-, Förder- oder Handhabungsmaschine, womit beispielsweise auch eine Getränkeabfüll- und/oder Verpackungsmaschine gemeint sein kann.

Typischerweise kann das bspw. durch eine endlos umlaufende geschlossene Rollenkette gebildete Zugmittel des Zugmittelantriebes über mindestens zwei umlenkende, drehbar gelagerte und entfernt voneinander positionierte Zahnräder geführt sein, deren rotierende Wellen parallel zueinander angeordnet und innerhalb der jeweiligen Maschinenumgebung gelagert sind, wobei die Zahnräder derart miteinander fluchten, dass die das Zugmittel bildende Rollenkette weitgehend ohne Schräglauf auf den Zahnrädern geführt ist. Dabei kann eine der Wellen mit dem darauf drehfest angeordneten Zahnrad eine Antriebswelle sein, während die andere Welle als Abtriebswelle sowie als nicht angetriebene Lagerwelle für das zweite Zahnrad dienen kann.

Das über die Zahnräder gelegte bzw. geführte und solchermaßen als Antriebsübertragung dienende Zugmittel weist ein Zugtrum auf, womit der Abschnitt des Zugmittels gemeint ist, der sich zwischen dem Antriebszahnrad und dem nicht angetriebenen Zahnrad befindet. Das nicht angetriebene Zahnrad kann eine Drehverbindung zu einem angetriebenen Maschinenteil, zu einer Fördereinrichtung o. dgl. herstellen, wobei die solchermaßen über das Zugmittel angetriebene Welle mit dem darauf befindlichen Zahnrad normalerweise einen gewissen Widerstand bildet, der mit der Antriebswelle, dem darauf befindlichen Antriebszahnrad und dem Zugmittel zu überwinden ist.

Aus diesem Grund steht der das Zugtrum bildende Abschnitt des Zugmittels bei einer mit Antriebsdrehmoment beaufschlagten Antriebswelle mit darauf befindlichem Antriebszahnrad unter Zug. Da somit das Zugtrum naturgemäß unter Zugspannung steht und damit eine direkte, jeweils tangential anliegende Verbindungslinie zwischen Antriebszahnrad und nicht angetriebenem Zahnrad ausbildet, eignet sich das Zugtrum nicht für die Positionierung einer Spannvorrichtung.

Neben dem Zugtrum weist das Zugmittel ein Leertrum auf, womit der rücklaufende Abschnitt des Zugmittels zwischen nicht angetriebenem Zahnrad und Antriebszahnrad gemeint ist, der sich in Richtung des nicht angetriebenen Zahnrades bewegt. Da die Rollenkette des Zugmittelantriebs keine andere Drehrichtung zulässt, dreht sich auch das nicht angetriebene Zahnrad entsprechend der Umlaufrichtung des Zugmittels bzw. der Rollenkette.

Da sich eine Rollenkette, wie sie hier beispielhaft als Zugmittel im Zugmittelantrieb eingesetzt wird, aufgrund ihrer Teilung, die durch die Rollenglieder vorgegeben ist, oftmals nicht exakt gespannt einbauen lässt und somit meist im Leertrum einen gewissen Durchhang aufweist, kann es sinnvoll sein, im Leertrum eine geeignete Spannvorrichtung einzubauen, die zudem für einen Ausgleich von Verschleiß und einer sich verschleißbedingt allmählich längenden Rollenkette sorgen kann. Zudem kann die Spannvorrichtung eine wichtige Funktion für einen ruhigen Lauf des Zugmittels erfüllen, indem sie ein Schlagen im Leertrum und einen damit verbundenen unruhigen Lauf sowie eine damit einhergehende unerwünschte Geräuschentwicklung reduzieren oder weitgehend verhindern kann.

Um ihre Aufgabe in der gewünschten Weise erfüllen zu können, ist die erfindungsgemäße Spannvorrichtung demzufolge an einem ortsfesten Rahmenabschnitt oder Rahmenbauteil der Maschinenumgebung oder der Verpackungsmaschine im Bereich eines hierfür geeigneten und ausreichenden Einbauraum bietenden Bereiches des umlaufenden Zugmittels positioniert, in welchem das Leertrum verläuft.

Die Spannvorrichtung umfasst insbesondere eine an der Maschine oder an dem Rahmenabschnitt der Maschinenumgebung verankerte Nabe, an der ein elastisch nachgiebiger Gleitabschnitt hebelartig befestigt sein kann, wobei die Nabe zwar grundsätzlich eine Drehbarkeit bietet, diese aber nach Zustellung des hebelartigen Gleitabschnittes an das Leertrum des Zugmittels festgestellt wird, so dass sich die Nabe gegenüber der Verankerung am Rahmenabschnitt nicht mehr verdrehen kann.

Aufgrund seiner elastischen Nachgiebigkeit kann der hebelartige Gleitabschnitt gegen das Zugmittel in dessen Leertrum zugestellt werden und kann solchermaßen auf das Leertrum einwirken, so dass dieses zwischen seinen beiden Umlenkungen, d.h. zwischen den umlaufenden Zahnrädern vorspannt wird. Bei umlaufendem Zugmittel und dementsprechend eine rückstellende Kraft auf die Spannvorrichtung ausübendem Leertrum kann sich der hebelartige Gleitabschnitt aufgrund seiner elastischen Eigenschaften definiert verformen und zumindest geringfügig zur Außenseite des Zugmittels ausweichen.

Die nach einiger Zeit notwendige Justierung und Neueinstellung des Gleitabschnittes mittels der Verankerung der Nabe am Rahmenabschnitt der Maschinenumgebung erfolgt zweckmäßigerweise derart, dass der Verformungsweg des elastischen Gleitabschnittes in möglichst großem Umfang genutzt werden kann, ohne das Zugmittel im Leertrum über Gebühr vorzuspannen. Bei einer zu geringen Vorspannung wird dagegen der Verformungsweg des nachgiebigen Gleitabschnittes nicht in vollem Umfang genutzt, was zudem einen unerwünschten Durchhang des Zugmittels und ein nicht ausreichend vorgespanntes Leertrum - mit allen oben genannten Nachteilen - zur Folge haben kann.

Es sei an dieser Stelle darauf hingewiesen, dass die Spannvorrichtung grundsätzlich in jedem Leertrum eines umlaufenden Zugmittels eingesetzt und positioniert werden kann, auch wenn dieses über mehr als zwei Umlenkungen geführt ist, da auch hier dieselben Grundsätze gelten wie bei einem über nur zwei voneinander beabstandete Umlenkräder geführten umlaufenden Zugmittel.

Der Gleitabschnitt kann insbesondere durch einen konvex gekrümmten Ausleger gebildet sein oder einen solchen Ausleger aufweisen, der an der Nabe verankert ist und dessen konvex gekrümmte Seite dem Leertrum des Zugmittels zugewandt ist und dort anliegt, so dass die das Zugmittel bildende Kette oder der das Zugmittel bildende umlaufende Riemen dort aufliegt und entlanggleiten kann.

In der Praxis kann der Ausleger des Gleitabschnittes durch ein elastisch verformbares Material gebildet sein, z.B. aus einem Kunststoffmaterial, das sich elastisch in der benötigten Weise verformen kann. Insbesondere kann vorgesehen sein, dass der Ausleger einstückig mit der Nabe verbunden ist, d.h. baulich in der Nabe integriert ist.

Wie schon oben erwähnt, kann die hier so bezeichnete Maschinenumgebung z.B. durch eine Getränkeabfüll- und/oder Verpackungsmaschine gebildet sein, die über verschiedene Förder- und Antriebseinrichtungen verfügt, so dass der hier erläuterte Zugmittelantrieb z.B. Teil eines Fördermittelabtriebes sein kann. Die im Falle einer Kette als Zugmittel durch Zahnräder gebildeten Umlenkungen können auch allgemein als Umlenkrollen oder -räder bezeichnet werden.

Wahlweise kann sich z.B. an einer horizontalen Strebe des Maschinenrahmens ein geeigneter Montagesockel befinden, der insbesondere fest an der horizontalen Strebe oder dem Rahmenbauteil verankert sein kann, bspw. durch eine Verschraubung oder durch eine Schweißverbindung. Der z.B. als quaderförmiges Bauteil ausgebildete Montagesockel dient einerseits zur festen, aber verstellbaren oder verdrehbaren Verankerung der Spannvorrichtung am Rahmenbauteil oder der Strebe, sorgt zudem jedoch für die notwendige Annäherung der sehr kompakt ausgeführten und eine relativ geringe Breite aufweisenden Nabe und des sich daran anschließenden Gleitabschnittes der Spannvorrichtung, so dass diese mittels des ausreichend breit ausgeführten Montagesockels in eine fluchtende Position mit dem umlaufenden Zugmittel gebracht sind, wenn die Spannvorrichtung dort am Sockel montiert ist.

Die Nabe kann bspw. einen quaderförmigen Grundkörper aufweisen, der mit einer einzelnen Gewindeschraube am Montagesockel befestigt sein kann. Um dies zu ermöglichen, kann der quaderförmige Grundkörper optional mit einer Durchgangsbohrung versehen sein, die sich quer durch den Grundkörper hindurch erstreckt, und zwar von einer Längsseite zur anderen, so dass dort die Gewindeschraube hindurchgesteckt werden kann und nach ihrem Festschrauben den Grundkörper der Nabe in der solchermaßen vorgegebenen Einbauposition fixieren kann.

Wie es aus den obigen Erläuterungen hervorgeht, kann die Nabe durch die Montage am Sockel mittels der einzigen Schraube zwar zunächst soweit um die Mittelachse der Schraube drehbar sein, dass der hebelartige Gleitabschnittes an das Leertrum des Zugmittels zugestellt werden kann, wodurch eine erste Grobeinstellung der Spannvorrichtung ermöglicht ist. Nach Festziehen der Schraube kann die im Wesentlichen durch den blockartigen Grundkörper gebildete Nabe gegenüber der Verankerung am Rahmenabschnitt nicht mehr verdreht werden. Da der Grundkörper zudem keine nennenswerte elastische Verformbarkeit aufweist, erfolgt die im Betrieb des Zugmittelantriebes angestrebte Vorspannung des Zugmittels im Leertrum nur noch über die elastische Verformbarkeit des gekrümmt geformten Auslegers des am Leertrum des Zugmittels anliegenden Gleitabschnittes.

Der Gleitabschnitt kann bspw. durch einen etwa ein Kreisbogensegment von knapp 180° abdeckenden, in Richtung zum Leertrum des Zugmittels konvex gekrümmten Ausleger gebildet sein, dessen am Zugmittel anliegende Gleitoberfläche wahlweise mit einer geeigneten nutartigen Konturierung ausgestattet sein kann, die bspw. mit einer Dimensionierung einer das Zugmittel bildenden Rollenkette korrespondieren kann, so dass diese dort besser geführt und gegen seitliches Abspringen geschützt ist.

Der solchermaßen geformte Ausleger des Gleitabschnittes umfasst mehrere Funktionsabschnitte. Einer dieser Funktionsabschnitte ist durch einen Anlageabschnitt gebildet, der vollflächig an einer rechteckförmigen Flachseite des quaderförmigen Grundkörpers der Nabe anliegt und dort z.B. mittels einer Verschraubung befestigt sein kann. Sinnvollerweise ist der Anlageabschnitt so dimensioniert, dass er mit der Größe der kontaktierten Flachseite des Grundkörpers korrespondiert.

Zudem kann die zur Flachseite des Grundkörpers weisende Fläche des Anlageabschnittes an beiden Schmalseiten jeweils eine Abstufung aufweisen, die den Grundkörper beidseitig seiner kontaktierten Flachseite umfassen und weitgehend spielfrei kontaktieren, so dass die Positionierung des Anlageabschnittes gegenüber dem Grundkörper vorgegeben ist. Mit eingesetzter und festgelegter Verschraubung ist der Gleitabschnitt somit in definierter Weise am Grundkörper der Nabe verankert.

An eine dieser gestuften Schmalseiten des Anlageabschnittes schließt sich der um mehr als 90° abgewinkelte kreisbogenförmige Ausleger an, und zwar vorzugweise in einer Materialstärke, die in etwa mit dem flachen Anlageabschnitt übereinstimmt oder gegenüber dessen Materialstärke etwas geringer ist, so dass die definierte elastische Verformung des Auslegers sichergestellt werden kann, ohne dass dadurch eine Verformung des Anlageabschnittes oder dessen Ablösung vom Grundkörper ausgelöst wird. Vorzugsweise kann der Ausleger einstückig mit dem Anlageabschnitt ausgebildet sein, wobei der solchermaßen geformte Gleitabschnitt vorzugsweise aus einem elastischen Kunststoffmaterial oder aus einem geeigneten elastischen Verbundmaterial aus Kunststoff mit eingelagerten Verstärkungsfasern, z.B. aus GfK, CfK o. dgl. Material gefertigt sein kann.

Ein freies Ende des gekrümmten Auslegers kann sinnvollerweise in etwa das Niveau der Kontaktebene zwischen dem Anlageabschnitt und dem Grundkörper erreichen, wodurch der oben erwähnte Kreissegmentwinkel von etwa 180° gegeben ist.

Ein weiteres wichtiges Funktionselement, das ganz wesentlich die Verformungsparameter des elastisch nachgiebigen Auslegers und damit die elastischen Eigenschaften der gesamten Spannvorrichtung beeinflussen kann, kann durch ein separates, mittels der Verschraubung am Grundkörper montiertes und in nachfolgend beschriebener Weise mit dem verformbaren Ausleger zusammenwirkendes Federblech gebildet sein.

Das normalerweise relativ dünn ausgeführte Federblech weist eine Hauptfläche auf, die größenmäßig in etwa mit der korrespondierenden Flachseite des Grundkörpers der Nabe übereinstimmt, auf der das Federblech mit seiner flachen Hauptfläche montierbar ist. Die Montagefläche des Federblechs liegt der Fachseite des Grundkörpers, an der der Anlageabschnitt des Gleitabschnittes montiert ist, gegenüber. Das Federblech kann mit derselben Verschraubung fest am Grundkörper der Nabe fixiert sein oder werden, mit der an der gegenüberliegenden Flachseite auch der Anlageabschnitt fixierbar ist. Zu diesem Zweck ist in der Hauptfläche eine Montagebohrung eingebracht, die größenmäßig sinnvollerweise mit der entsprechend dimensionierten Verschraubung korrespondiert.

An die Hauptfläche schließt sich ein U-förmiger Bügel an, der eine zweifach um jeweils 90° abgewinkelte Fortsetzung der Hauptfläche in derselben Materialstärke bildet. Bei auf der oberen Flachseite des Grundkörpers fixierter Hauptfläche ragt dieser U-förmige Bügel über die Flachseite des Grundkörpers hinaus, so dass er gegenüber der Hauptfläche in gewissem Maße elastisch verformbar ist, und zwar in definierter Zusammenwirkung mit dem elastisch verformbaren Ausleger des Gleitabschnittes.

Der U-förmige Bügel weist eine um 90° gegenüber der nicht abgewinkelten Verlängerung der Hauptfläche abgewinkelte Basis auf, an die sich ein nochmals um 90° abgewinkelter Schenkel anschließt, der mitsamt dem ganzen Bügel federnd verformbar ist. Der Schenkel ist nur mit der Basis verbunden und endet ansonsten frei. Die hier erläuterte Gestaltung mit dem zweifach abgewinkelten U-förmigen Abschnitt, bestehend aus Verlängerung, Basis und unterem freien Schenkel kann selbstverständlich auch abgewandelt werden und bspw. einen durchgängigen Radius zwischen der nicht abgewinkelten Verlängerung und dem parallel dazu angeordneten freien Schenkel vorsehen, so dass bei einer solchen Variante die Basis nicht um jeweils 90° gegenüber den angrenzenden Abschnitten abgewinkelt ist, sondern einen 180°-Kreisbogen beschreibt.

Die Wirkungsweise des Federblechs ist so zu verstehen, dass mit seiner Montage die Elastizität des Gleitabschnittes der Spannvorrichtung noch präziser eingestellt und durch Gestaltung des Federblechs in gewünschter Weise variiert werden kann als ohne ein solches Federblech. Bei montiertem Federblech ist dieses an der dem Anlageabschnitt des Gleitabschnittes gegenüberliegenden Flachseite des quaderförmigen Grundkörpers der Nabe montiert. Die Befestigung erfolgt mittels der Verschraubung, die das Federblech an seiner Montagebohrung durchdringt, durch die weitere Durchgangsbohrung des Grundkörpers geschoben ist und zudem den Anlageabschnitt an einer Bohrung durchdringt, wobei die Verschraubung bspw. mittels aufgeschraubter Gewindemutter und oberseitigem Sechskantkopf befestigt sein kann.

Im nicht verformten Zustand des bogenförmig gekrümmten Auslegers und im nicht verformten Zustand des Federblechs liegt der am freien Ende abgewinkelte Schenkel des Bügels an der Stirnseite des freien Endes des Auslegers an, so dass jede Verformung des Auslegers aufgrund eines gegen die Gleitoberfläche drückenden Zugmittels unmittelbar zu einer elastischen Verformung des Bügels des Federblechs führt und sich über den verlängerten Abschnitt in die am Grundkörper verschraubte und dort flächig anliegende Hauptfläche überträgt.

Sofern eine solche Verformung ein gewisses Maß überschreitet, kann die Hauptfläche teilweise von der flächigen Anlage am Grundkörper gelöst werden, da sich bei am Schenkel angreifendem Ausleger der vordere verlängerte Abschnittes der Hauptfläche vom Grundkörper abhebt und sich ganze Abschnitte der Hauptfläche elastisch verformen können, ohne dass sich dabei der vordere Bügel nennenswert in sich verformen muss.

Die elastischen Eigenschaften des Federblechs und damit der gesamten Spannvorrichtung lassen sich durch die verwendete Blechstärke, die Biegsamkeit des verwendeten Blechmaterials sowie zusätzlich durch einen optional zu verstehenden U-förmigen Schlitz beeinflussen, der um die Montagebohrung herum und beabstandet zu dieser angeordnet ist. Dieser U-förmige Schlitz kann durch eine Ausstanzung oder anderweitig eingebrachte schlitzartige Aussparung gebildet sein, der die Hauptfläche unterbricht und dafür sorgt, dass bei der in der Montagebohrung fixierten Verschraubung zwar der die Montagebohrung unmittelbar umgebende Bereich der Hauptfläche mit der entsprechenden Oberfläche des Grundkörpers in flächigem Kontakt bleibt, dass sich aber gleichzeitig die außerhalb des U-förmigen Schlitzes befindlichen Bereiche der Hauptfläche vom Grundkörper abheben können, wenn eine Verformungskraft über das stirnseitige freie Ende des Auslegers auf den Schenkel einwirken.

Die Elastizität und Verformbarkeit der Hauptfläche können wiederum durch die Gestaltung des U-förmigen Schlitzes in gewissen Ausmaßen beeinflusst werden. So können bspw. die beiden Schenkelabschnitte des U-förmigen Schlitzes in etwa einen Abstand aufweisen, der dem doppelten Durchmesser der Montagebohrung entspricht. Der Abstand der beiden parallelen Schenkelabschnitte des U-förmigen Schlitzes kann zudem in etwa einem Drittel der Breite der Hauptfläche des Federblechs in diesem Bereich entsprechen.

Während der U-förmige Schlitz im Bereich um die Montagebohrung herum in seinem Abstand zum Außendurchmesser der Montagebohrung weitgehend konstant bleibt und einen 180°-Bogen um die Montagebohrung herum beschreibt, erstrecken sich die beiden parallelen Schenkelabschnitte normalerweise relativ weit in Richtung zum stirnseitigen Rand der Hauptfläche, was die Elastizität der Hauptfläche bei auf den Schenkel einwirkenden Verformungskräften erhöht. Bei kürzer ausgeführten Schenkelabschnitten wäre die Hauptfläche in sich steifer und könnte einer Krafteinwirkung am Bügel weniger nachgeben.

Aus der beschriebenen Wirkungsweise des Federblechs wird deutlich, dass dieses sinnvollerweise durch ein dünnes Metallblech gebildet ist, das ausreichend steif und gleichzeitig elastisch verformbar ist, ohne zu nachgiebig zu sein, da es den im Betrieb auftretenden Verformungskräften einen ausreichenden Widerstand entgegenzusetzen hat. Geeignete Federbleche, die auch nach längerer Betriebsdauer ihre elastischen Eigenschaften und ihre Steifigkeit nicht verlieren, stehen dem über entsprechende Materialkenntnisse verfügenden Fachmann zur Verfügung. Der Fachmann weiß auch, dass er alternative Materialen für das Federblech verwenden kann, etwa dünne CfK-Streifen, welche die gewünschten Festigkeits- und Elastizitätsparameter aufweisen.

Eine weitere vorteilhafte Option, die technisch jedoch nicht notwendig wäre, ist durch eine optische Anzeige der Verformung des Federblechs gegeben, die durch den im Einbau innerhalb des Zugmittelantriebes durch das Leertrum in Verformungsrichtung gedrückten Ausleger des Gleitabschnittes ausgelöst wird. Zu diesem Zweck kann sich bspw. an geeigneter Stelle des Bügels ein abgewinkeltes Zeigerblech befinden, das wahlweise an die obere Verlängerung der Hauptfläche geschraubt sein kann. Ein gegenüber einem parallel zur Verlängerung ausgerichteten und dort verschraubten oberen Streifen abgewinkelter Pfeilabschnitt des Zeigerblechs weist hierbei mit seiner Spitze auf eine Strichmarkierung, die sich an einer seitlichen Oberfläche des Grundkörpers der Nabe befinden kann. An dieser seitlichen Oberfläche mit der Strichmarkierung kann sich zudem die oben schon erwähnte Durchgangsbohrung befinden, über die der Grundkörper am Montagesockel verschraubt werden kann.

Bei sich verformendem Ausleger des Gleitabschnittes drückt das freie Ende des Auslegers auf die Unterseite des Schenkels des Bügels, der dadurch mitsamt dem sich verformenden vorderen Abschnitt der Hauptfläche ausgelenkt wird. Die Auslenkung des Bügels, an dessen oberen verlängertem Abschnitt der Hauptfläche das Zeigerblech der optischen Anzeige verankert sein kann, wird durch die Verschiebung des Pfeilabschnittes gegenüber der Strichmarkierung am Grundkörper angezeigt und ablesbar gemacht. Wenn die Spitze des Pfeilabschnittes des Zeigerblechs exakt auf die Strichmarkierung hinzeigt, liegt keine Verformung vor, während jegliche Verschiebung des Pfeilabschnittes in Richtung zur oberen Deckseite des Grundkörpers mit dem darauf montierten Federblech eine Verformung des Auslegers und damit eine Krafteinwirkung in Auslenkungsrichtung aufgrund des dagegen drückenden Leertrums des Zugmittelantriebes anzeigt.

Nachfolgen sei auf eine technisch gleichwertige Alternativgestaltung der optischen Anzeige hingewiesen. So kann sich der Pfeilabschnitt an einem Zeigerblech befinden, das unmittelbar seitlich aus dem unteren Schenkelblech des Bügels herausragt und durch mehrfache Abkantung in gleicher Weise wie zuvor erläutert auf die Strichmarkierung am Grundkörper hinweisen kann. Die Wirkungsweise dieser Variante der optischen Anzeige unterscheidet sich nicht von der zuvor beschriebenen ersten Variante.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht eines Zugmittelantriebes, der mit einer Ausführungsvariante einer erfindungsgemäßen Spannvorrichtung ausgestattet ist.
Figuren 2A bis 2D zeigen mehrere Ansichten eines Ausführungsbeispiels eines Zugmittelantriebes mit einem über zwei Umlenkungen geführten Zugmittels, in dessen Leertrum eine erfindungsgemäß ausgebildete Spannvorrichtung angeordnet ist.
Figuren 3A bis 3D zeigt eine Ausgestaltung der Spannvorrichtung in mehreren schematischen Ansichten.
Fig. 4 zeigt eine schematische und perspektivische Detailansicht einzelner Komponenten der Spannvorrichtung.
Fig. 5 zeigt eine schematische und perspektivische Detailansicht eines elastisch verformbaren Abstützelements, das Teil der Spannvorrichtung ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Spannvorrichtung ausgestaltet sein kann und stellen keine abschließende Begrenzung dar.

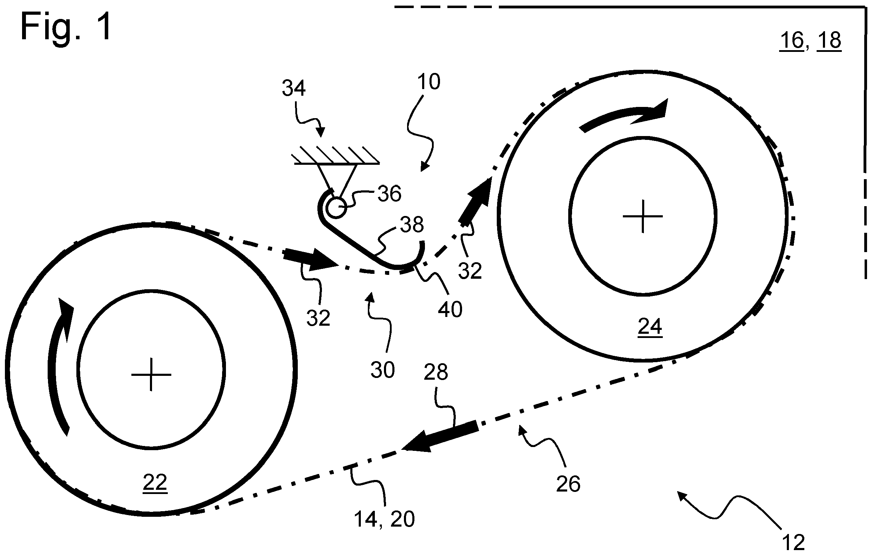

Die schematische Seitenansicht der Fig. 1 zeigt die wichtigsten Komponenten einer Ausführungsvariante der erfindungsgemäßen Spannvorrichtung 10, die in einem umlaufenden Zugmittelantrieb 12 für die Sicherstellung und Aufrechterhaltung einer ausreichenden Vorspannung eines über mehrere Umlenkungen geführten Zugmittels 14 eingesetzt werden kann.

Der hier nur schematisch angedeutete Zugmittelantrieb 12 kann insbesondere durch einen Ketten- oder Riemenantrieb gebildet sein. Typischerweise kann ein solcher Zugmittelantrieb 12 ein Bestandteil oder eine Antriebskomponente einer Förder- oder Antriebseinheit innerhalb einer Maschinenumgebung 16 sein, insbesondere einer Produktions-, Förder- oder Handhabungsmaschine, womit beispielsweise auch eine Getränkeabfüll- und/oder Verpackungsmaschine 18 gemeint sein kann. Die hier nicht näher ausgeführte Maschinenumgebung 16, gebildet bspw. durch die erwähnte Getränkeabfüll- und/oder Verpackungsmaschine 18 ist zeichnerisch lediglich durch einige Striche angedeutet, soll hier jedoch nicht näher erläutert werden.

Wie es die schematische Seitenansicht der Fig. 1 erkennen lässt, ist das hier bspw. durch eine endlos umlaufende geschlossene Rollenkette 20 gebildete Zugmittel 14 des Zugmittelantriebes 12 über mindestens zwei umlenkende Zahnräder 22 und 24 geführt, deren rotierende Wellen parallel zueinander angeordnet und innerhalb der jeweiligen Maschinenumgebung 16 gelagert sind, wobei die Zahnräder 22 und 24 derart miteinander fluchten, dass die das Zugmittel 14 bildende Rollenkette 20 weitgehend ohne Schräglauf auf den Zahnrädern 22 und 24 geführt ist.

Eine der Wellen mit dem darauf drehfest angeordneten Zahnrad 22 kann dabei eine Antriebswelle sein, während die andere Welle als Abtriebswelle sowie als nicht angetriebene Lagerwelle für das zweite Zahnrad 24 dienen kann.

Das über die Zahnräder 22 und 24 gelegte und solchermaßen als Antriebsübertragung dienende Zugmittel 14 weist ein Zugtrum 26 auf, womit der Abschnitt des Zugmittels 14 gemeint ist, der sich zwischen dem - hier links angeordneten - Antriebszahnrad 22 und dem - hier rechts anordneten - nicht angetriebenen Zahnrad 24 befindet. Das nicht angetriebene Zahnrad 24 kann eine Drehverbindung zu einem angetriebenen Maschinenteil, zu einer Fördereinrichtung o. dgl. herstellen, wobei die solchermaßen über das Zugmittel 14 angetriebene Welle mit dem darauf befindlichen Zahnrad 24 normalerweise einen gewissen Widerstand bildet, der mit der Antriebswelle, dem darauf befindlichen Antriebszahnrad 22 und dem Zugmittel 14 zu überwinden ist.

Aus diesem Grund steht der das Zugtrum 26 bildende Abschnitt des Zugmittels 14 bei einer mit Antriebsdrehmoment beaufschlagten Antriebswelle mit darauf befindlichem Antriebszahnrad 22 unter Zug, wie durch den entsprechenden Richtungspfeil 28 im Zugtrum 26 angedeutet ist. Das Antriebszahnrad 22 dreht sich in Pfeilrichtung, was in der Seitendarstellung der Fig. 1 einer Umdrehung im Uhrzeigersinn entspricht.

Da somit das Zugtrum 26 naturgemäß unter Zugspannung 28 steht und damit eine direkte, jeweils tangential anliegende Verbindungslinie zwischen Antriebszahnrad 22 und nicht angetriebenem Zahnrad 24 ausbildet, eignet sich das Zugtrum 26 nicht für die Positionierung einer Spannvorrichtung 10.

Neben dem Zugtrum 26 weist das Zugmittel 14 ein Leertrum 30 auf, womit der rücklaufende Abschnitt des Zugmittels 14 zwischen nicht angetriebenem Zahnrad 24 und Antriebszahnrad 22 gemeint ist, der sich in Richtung des nicht angetriebenen Zahnrades bewegt. Diese Rücklaufrichtung 32 des Leertrums 30 ist ebenfalls durch Richtungspfeile angedeutet. Da die Rollenkette 20 des Zugmittelantriebs 12 keine andere Drehrichtung zulässt, dreht sich auch das nicht angetriebene Zahnrad 24 in der dargestellten Pfeilrichtung, was in der Seitendarstellung der Fig. 1 ebenfalls einer Umdrehung im Uhrzeigersinn entspricht.

Da sich eine Rollenkette 20, wie sie hier als Zugmittel 14 im Zugmittelantrieb 12 eingesetzt wird, aufgrund ihrer Teilung, die durch die Rollenglieder vorgegeben ist, oftmals nicht exakt gespannt einbauen lässt und somit meist im Leertrum 30 einen gewissen Durchhang aufweist, kann es sinnvoll sein, im Leertrum 30 eine geeignete Spannvorrichtung 10 einzubauen, die zudem für einen Ausgleich von Verschleiß und einer sich verschleißbedingt allmählich längenden Rollenkette 20 sorgen kann. Zudem kann die Spannvorrichtung 10 eine wichtige Funktion für einen ruhigen Lauf des Zugmittels 14 erfüllen, indem sie ein Schlagen im Leertrum 30 und einen damit verbundenen unruhigen Lauf sowie eine damit einhergehende unerwünschte Geräuschentwicklung reduzieren oder weitgehend verhindern kann.

Um ihre Aufgabe in der gewünschten Weise erfüllen zu können, ist die erfindungsgemäße Spannvorrichtung 10 demzufolge an einem ortsfesten Rahmenabschnitt 34 oder Rahmenbauteil der Maschinenumgebung 16 oder der Verpackungsmaschine 18 im Bereich eines hierfür geeigneten und ausreichenden Einbauraum bietenden Bereiches des umlaufenden Zugmittels 14 positioniert, in welchem das Leertrum 30 verläuft.

Die Spannvorrichtung 10 umfasst eine an der Maschine oder an dem Rahmenabschnitt 34 der Maschinenumgebung 16 verankerte Nabe 36, an der ein elastisch nachgiebiger Gleitabschnitt 38 hebelartig befestigt ist, wobei die Nabe 36 zwar grundsätzlich eine Drehbarkeit bietet, diese aber nach Zustellung des hebelartigen Gleitabschnittes 38 an das Leertrum 30 des Zugmittels 14 festgestellt wird, so dass sich die Nabe 36 gegenüber der Verankerung am Rahmenabschnitt 34 nicht mehr verdrehen kann.

Aufgrund seiner elastischen Nachgiebigkeit kann der hebelartige Gleitabschnitt 38 gegen das Zugmittel 14 in dessen Leertrum 30 zugestellt werden und solchermaßen auf das Leertrum 30 einwirken, dass dieses zwischen seinen beiden Umlenkungen, d.h. zwischen den umlaufenden Zahnrädern 22 und 24 vorspannt wird. Bei umlaufendem Zugmittel 14 und dementsprechend eine rückstellende Kraft auf die Spannvorrichtung 10 ausübendem Leertrum 30 kann sich der hebelartige Gleitabschnitt 38 aufgrund seiner elastischen Eigenschaften definiert verformen und zumindest geringfügig zur Außenseite des Zugmittels 14 ausweichen.

Die Justage des Gleitabschnittes 38 mittels der Verankerung der Nabe 36 am Rahmenabschnitt 34 der Maschinenumgebung 16 erfolgt zweckmäßigerweise derart, dass der Verformungsweg des elastischen Gleitabschnittes 38 in möglichst großem Umfang genutzt werden kann, ohne das Zugmittel 14 im Leertrum 30 zu stark vorzuspannen. Bei einer zu geringen Vorspannung wird dagegen der Verformungsweg des nachgiebigen Gleitabschnittes 38 nicht in vollem Umfang genutzt, was zudem einen unerwünschten Durchhang des Zugmittels 14 und ein nicht ausreichend vorgespanntes Leertrum 30 - mit allen oben genannten Nachteilen - zur Folge haben kann.

Es sei bereits an dieser Stelle und unter Hinweis auf die in Fig. 1 gezeigte Ausführungsvariante des Zugmittelantriebes 12 erwähnt, dass die Spannvorrichtung 10 grundsätzlich in jedem Leertrum 30 eines umlaufenden Zugmittels 14 eingesetzt und positioniert werden kann, auch wenn dieses über mehr als zwei Umlenkungen geführt ist, da auch hier dieselben Grundsätze gelten wie bei einem über nur zwei voneinander beabstandete Umlenkräder geführten umlaufenden Zugmittel 14.

Der Gleitabschnitt 38 kann insbesondere durch einen konvex gekrümmten Ausleger 40 gebildet sein oder einen solchen Ausleger 40 aufweisen, der an der Nabe 36 verankert ist und dessen konvex gekrümmte Seite dem Leertrum 30 des Zugmittels 14 zugewandt ist und dort anliegt, so dass die das Zugmittel 14 bildende Kette 20 oder der das Zugmittel 14 bildende umlaufende Riemen dort aufliegt und entlanggleiten kann.

In der Praxis kann der Ausleger 40 des Gleitabschnittes 38 durch ein elastisch verformbares Material gebildet sein, z.B. aus einem Kunststoffmaterial, das sich elastisch in der benötigten Weise verformen kann. Wie es die folgenden Figuren beispielhaft erkennen lassen, kann es bevorzugt sein, dass der Ausleger 40 einstückig mit der Nabe 36 verbunden ist.

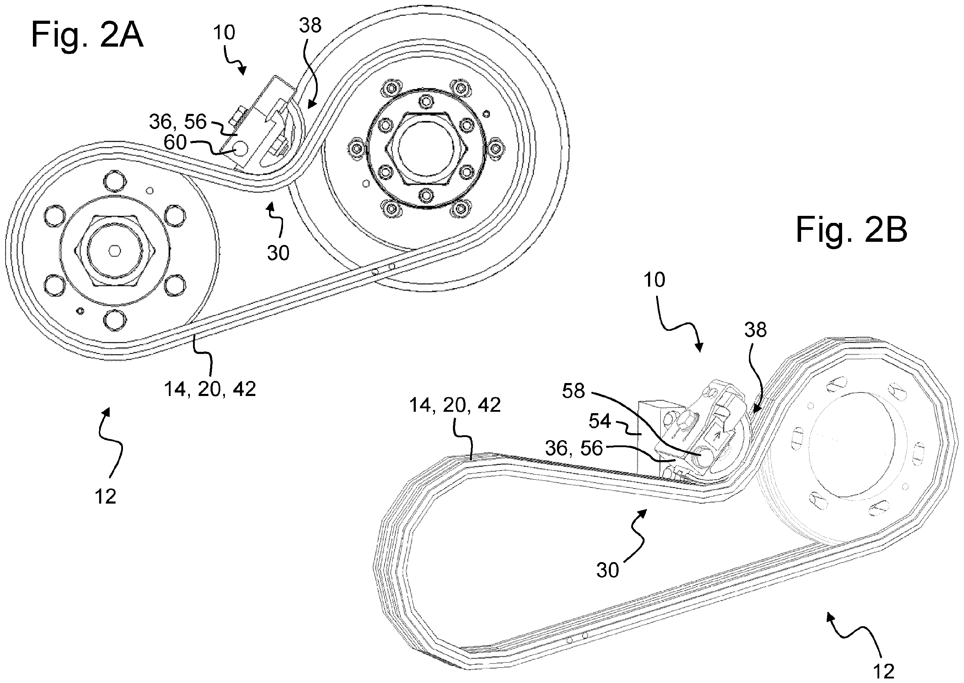

Die schematischen Darstellungen der Figuren 2A bis 2D zeigen jeweils die Einbausituation einer konkreten Ausführungsvariante einer erfindungsgemäßen Spannvorrichtung 10, wie sie im Leertrum 30 eines Zugmittelantriebes 12 zur Einstellung und Aufrechterhaltung einer definierten Vorspannung des endlos umlaufenden Zugmittels 14 sinnvoll angeordnet sein kann.

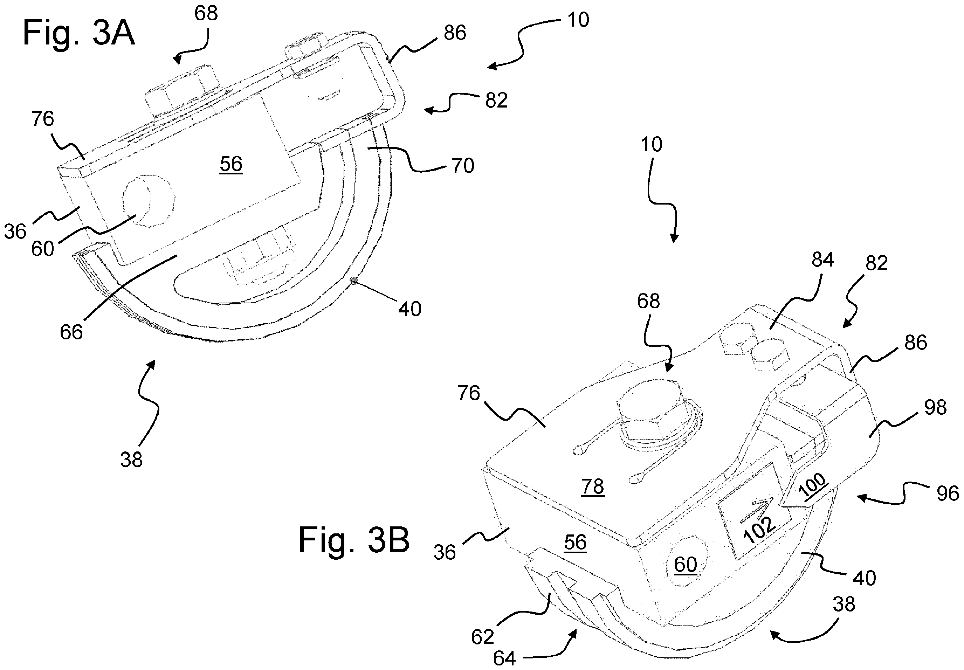

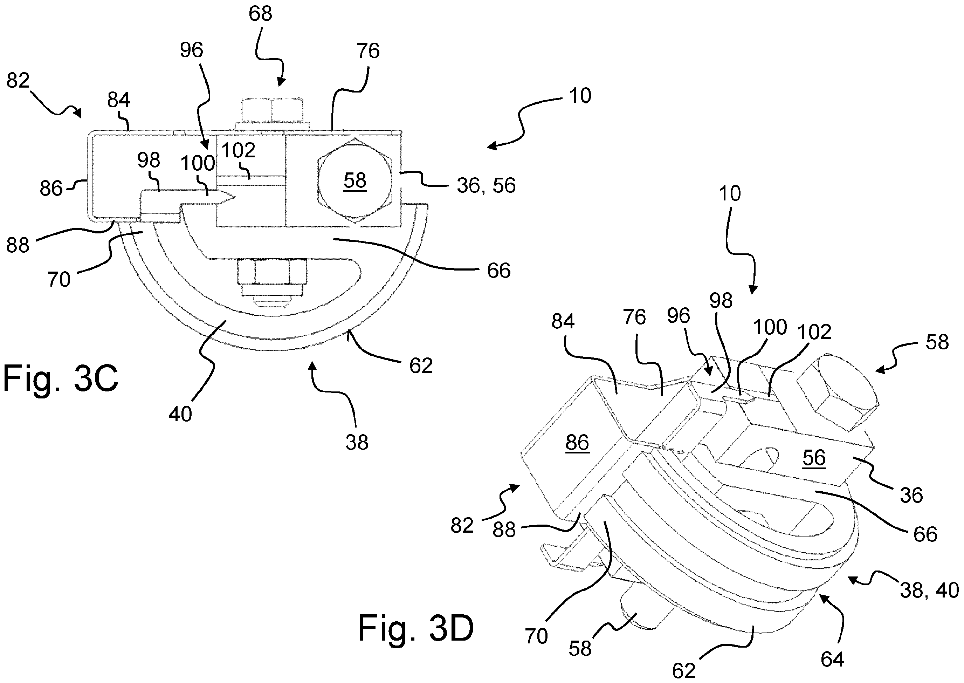

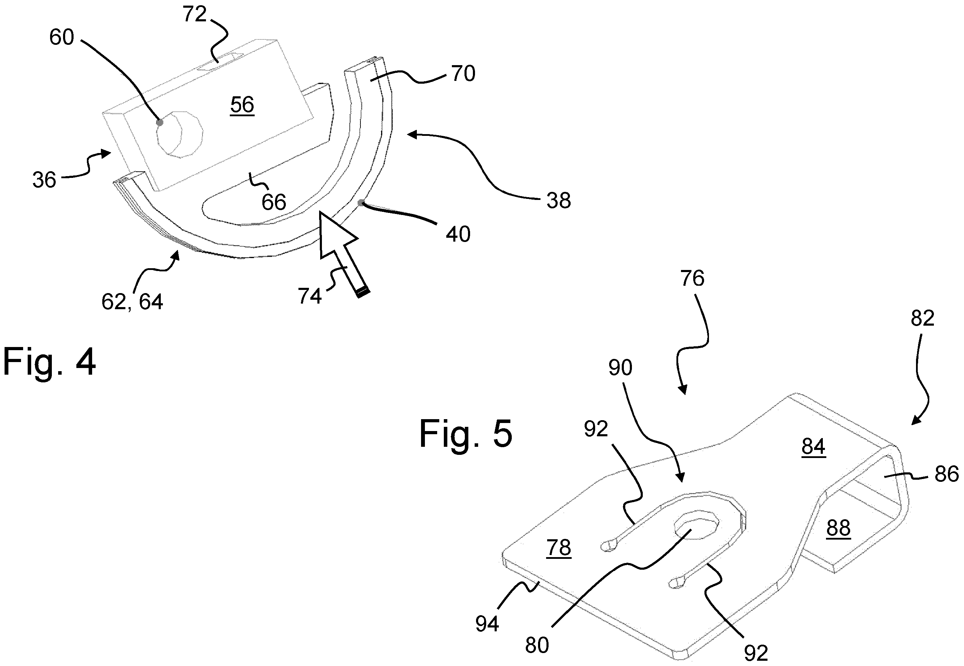

Die schematischen Perspektivansichten der Figuren 3A, 3B und 3D sowie die schematische Seitenansicht der Fig. 3C zeigen Detaildarstellungen der Spannvorrichtung 10 mit ihren zusammenwirkenden Komponenten. Die schematischen Perspektivansichten der Figuren 4 und 5 zeigen Detaildarstellungen einzelner Komponenten der Spannvorrichtung 10.

Der Aufbau, die Einstellbarkeit und die Wirkungsweise der erfindungsgemäßen Spannvorrichtung 10 soll nachfolgend figurenübergreifend anhand der in den Figuren 2A bis 3D, Fig. 4 und Fig. 5 beispielhaft gezeigten Ausführungsvarianten des Zugmittelantriebes 12 sowie der in diesem eingesetzten Spannvorrichtung 10 erläutert werden.

Wie schon oben anhand der Fig. 1 erläutert, kann es sich bei dem in den Figuren 2A bis 2D gezeigten Zugmittelantrieb 12 wiederum um einen Ketten- oder Riemenantrieb handeln, so dass auch das endlos umlaufende Zugmittel 14 wahlweise durch einen Riemen 42, durch eine Rollenkette 20 oder durch ein anderes geeignetes flexibles und für die Übertragung von Zugkräften zwischen mindestens zwei Umlenkrollen geeignetes Zugmittel 14 gebildet sein kann. Die hier nicht näher gezeigte Maschinenumgebung 16 kann bspw. durch eine Getränkeabfüll- und/oder Verpackungsmaschine 18 gebildet sein, die über verschiedene Förder- und Antriebseinrichtungen verfügt, so dass der gezeigte Zugmittelantrieb 12 z.B. Teil eines Fördermittelabtriebes sein kann. Da diese Maschinenumgebung 16 oder die Maschine 18 die unterschiedlichsten Gestaltungen aufweisen können, sind sie lediglich in Fig. 2B durch Bezugsziffern bezeichnet.

Die im Falle einer Kette 20 als Zugmittel 14 durch Zahnräder 22 und 24 gebildeten Umlenkungen können auch allgemein als Umlenkrollen oder -räder bezeichnet werden. In den Figuren 2A bis 2D sind diese mit gleich großen Durchmessern ausgestatteten Umlenkrollen mit den Bezugsziffern 44 (entspr. Antriebszahnrad 22) bzw. 46 (entspr. nicht angetriebenes Zahnrad 24) bezeichnet. Hierüber ist das durch den Riemen 42 oder die Kette 20 gebildete Zugmittel 14 des Zugmittelantriebes 12 geführt und kann solchermaßen als zugkraftübertragenes Element dienen.

Die beiden rotierenden Wellen 48 und 50, auf denen die Umlenkrollen 44 und 46 drehfest fixiert sind, sind in paralleler Anordnung zueinander innerhalb der Maschinenumgebung 16 gelagert, wobei die Zahnräder 22 und 24 oder die Umlenkrollen 44 und 46 derart miteinander fluchten, dass die das Zugmittel 14 bildende Rollenkette 20 oder der Riemen 42 weitgehend ohne Schräglauf auf den Zahnrädern 22, 24 oder Umlenkrollen 44, 46 geführt ist.

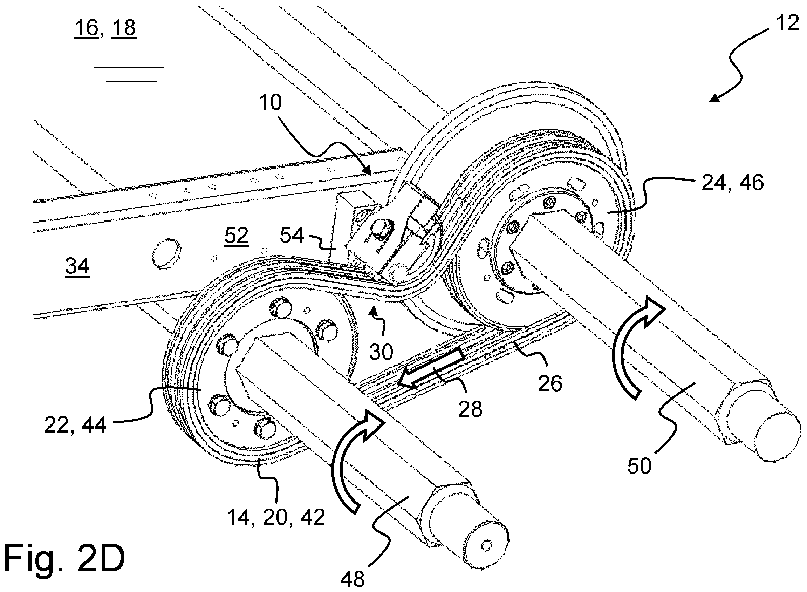

Die in Fig. 2D links angeordnete Welle 48 mit der darauf drehfest angeordneten Umlenkrolle 44 ist dabei die Antriebswelle 48, die bspw. mit einem geeigneten Antriebsmotor (nicht gezeigt) verbunden sein kann, der für den Drehantrieb der Welle 48 sorgen kann. Die in Fig. 2D rechts angeordnete zweite Welle 50 bildet eine indirekt über das Zugmittel 14 angetriebene Lager- und Abtriebswelle 50, die bspw. mit einem Förderantrieb oder einem anderen anzutreibenden Element der Maschinenumgebung 16 gekoppelt sein kann.

Aufgrund der in Fig. 2D durch Richtungspfeile kenntlich gemachten Umdrehungsrichtungen der Wellen 48 und 50 sowie der dadurch vorgegebenen Umlaufrichtung des Zugmittels 14 steht der das Zugtrum 26 bildende Abschnitt des Zugmittels 14 unter Zugspannung 28, während sich das zur nicht angetriebenen Umlenkrolle 46 zurücklaufende Leertrum 30 in der dargestellten Weise zur Positionierung der Spannvorrichtung 10 eignet. Wie es schon die Fig. 1 andeutet und auch die Figuren 2A bis 2D deutlich erkennen lassen, ist die Spannvorrichtung 10 je nach Auslegung zum Ausgleich einer deutlichen Auslenkung des Zugmittels vom gestreckten und direkten Verlauf zwischen den beiden Umlenkrollen 44 und 46 in der Lage.

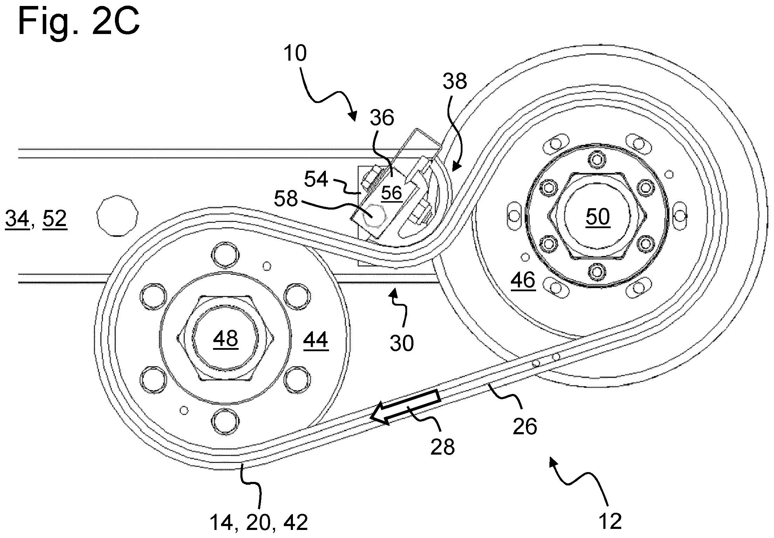

Um solchermaßen für die Beseitigung des Riemen- oder Kettendurchhanges im Leertrum 30 zu sorgen, ist die Spannvorrichtung 10 am maschinenfesten Rahmenbauteil 34 verankert, das im gezeigten Ausführungsbeispiel durch eine horizontale Strebe 52 gebildet ist (vgl. Figuren 2C und 2D), die insbesondere ein tragender Bestandteil eines Maschinenrahmens der hier nur in Teilausschnitten gezeigten Maschinenumgebung 16 sein kann.

An dieser horizontalen Strebe 52 des Maschinenrahmens befindet sich ein geeigneter Montagesockel 54, der insbesondere fest an der horizontalen Strebe 52 oder dem Rahmenbauteil 34 verankert sein kann, bspw. durch eine Verschraubung oder durch eine Schweißverbindung. Der in den Figuren 2B, 2C und 2D jeweils als quaderförmiges Bauteil verdeutlichte Montagesockel 54 dient einerseits zur festen, aber verstellbaren oder verdrehbaren Verankerung der Spannvorrichtung 10 am Rahmenbauteil 34 oder der Strebe 52, sorgt zudem jedoch für die notwendige Annäherung der sehr kompakt ausgeführten und eine relativ geringe Breite aufweisenden Nabe 36 und des sich daran anschließenden Gleitabschnittes 38 der Spannvorrichtung 10, so dass diese mittels des ausreichend breit ausgeführten Montagesockels 54 in eine fluchtende Position mit dem umlaufenden Zugmittel 14 gebracht sind, wenn die Spannvorrichtung 10 dort am Sockel 54 montiert ist.

Die Nabe 36 weist einen quaderförmigen Grundkörper 56 auf, der mit einer einzelnen Gewindeschraube 58 am Montagesockel 54 befestigt ist. Um dies zu ermöglichen, ist der quaderförmige Grundkörper 56 mit einer Durchgangsbohrung 60 versehen (vgl. Fig. 2A), die sich quer durch den Grundkörper 56 hindurch erstreckt, und zwar von einer Längsseite zur anderen, so dass dort die Gewindeschraube 58 hindurchgesteckt werden kann und nach ihrem Festschrauben den Grundkörper 56 der Nabe 36 in der solchermaßen vorgegebenen Einbauposition fixieren kann.

Der Sechskantkopf der sich in der Durchgangsbohrung 60 befindenden und den Grundkörper 56 der Nabe 36 am Montagesockel 54 fixierenden Gewindeschraube 58 ist in den Figuren 2B, 2C und 2D erkennbar und in den Figuren 2B und 2C mit der Bezugsziffer 60 kenntlich gemacht, während die Gewindeschraube 58, ebenso wie der Montagesockel 54 sowie die Strebe 52 in der Darstellung der Fig. 2A weggelassen wurden, so dass dort die Durchgangsbohrung 60 erkennbar ist.

Detaildarstellungen der mittels der Gewindeschraube 58 am Montagesockel 54 fixierbaren Spannvorrichtung 10 mit ihren einzelnen zusammenwirkenden Komponenten finden sich in den schematischen und perspektivischen Darstellungen der Figuren 3A, 3B und 3D sowie in der schematischen Seitenansicht der Fig. 3C, die nachfolgend näher erläutert werden.

Wie schon oben erwähnt, umfasst die Spannvorrichtung 10 eine am Montagesockel 54 an der Strebe 52 der Maschineumgebung 16 verankerte Nabe 36, die als quaderförmiger Grundkörper 56 mit der quer hindurchtretenden Durchgangsbohrung 60, die somit zwei gegenüberliegende Oberflächen durchdringt, wie dies die Figuren 3A und 3B erkennen lassen. Die Durchgangsbohrung ist so bemessen, dass die Gewindeschraube 58 mit geringem Spiel dort hindurchpasst, so dass der Grundkörper 56 mit einer seiner seitlichen Oberflächen unter reibschlüssiger Fixierung am Montagesockel 54 angepresst werden kann, wenn die Gewindeschraube 58 dort eingeschraubt und mittels geeigneten Werkzeuges am Sechskantkopf festgezogen wird.

Wie es die Figuren 3A bis 3D erkennen lassen, ist am Grundkörper 56 der Nabe 36 der elastisch nachgiebige Gleitabschnitt 38 einseitig befestigt, so dass der hebelartige gekrümmte Ausleger 40 sich an das Leertrum 30 des Zugmittels 14 anlegen kann (vgl. Figuren 1 und 2A bis 2D) und mit dem Zugmittelantrieb 12 in der gewünschten Weise zusammenwirken kann, dass das Zugmittel 14 die notwendige Spannung erhält, und dass ein unerwünschter Durchhang im Leertrum 30 beseitigt wird.

Wie es die zuvor erläuterten Figuren zudem erkennen lassen, ist die Nabe 36 durch die Montage am Sockel 54 mittels der einzigen Schraube 58 zwar zunächst soweit um die Mittelachse der Schraube 58 drehbar, dass der hebelartige Gleitabschnittes 38 an das Leertrum 30 des Zugmittels 14 zugestellt werden kann, wodurch eine erste Grobeinstellung der Spannvorrichtung 10 ermöglicht ist. Nach Festziehen der Schraube 58 kann die im Wesentlichen durch den blockartigen Grundkörper 56 gebildete Nabe 36 gegenüber der Verankerung am Rahmenabschnitt 34 nicht mehr verdreht werden. Da der Grundkörper 56 zudem keine nennenswerte elastische Verformbarkeit aufweist, erfolgt die im Betrieb des Zugmittelantriebes 12 angestrebte Vorspannung des Zugmittels 13 im Leertrum 30 nur noch über die elastische Verformbarkeit des gekrümmt geformten Auslegers 40 des am Leertrum 30 des Zugmittels anliegenden Gleitabschnittes 38.

Wie es die Figuren 3A bis 3D erkennen lassen, ist der Gleitabschnitt 38 durch einen etwa ein Kreisbogensegment von knapp 180° abdeckenden, in Richtung zum Leertrum 30 des Zugmittels 14 konvex gekrümmten Ausleger 40 gebildet, dessen am Zugmittel 14 anliegende Gleitoberfläche 62 wahlweise mit einer geeigneten nutartigen Konturierung 64 ausgestattet sein kann, die bspw. mit einer Dimensionierung einer das Zugmittel 14 bildenden Rollenkette 20 korrespondieren kann.

Der solchermaßen geformte Ausleger 40 des Gleitabschnittes 38 umfasst mehrere Funktionsabschnitte. Einer dieser Funktionsabschnitte ist durch einen Anlageabschnitt 66 gebildet, der vollflächig an einer rechteckförmigen Flachseite des quaderförmigen Grundkörpers 56 der Nabe 36 anliegt und dort im gezeigten Ausführungsbeispiel mittels einer Verschraubung 68 befestigt ist. Sinnvollerweise ist der Anlageabschnitt 66 so dimensioniert, dass er mit der Größe der kontaktierten Flachseite des Grundkörpers 56 korrespondiert.

Wie es die Figuren 3A bis 3D sowie die Detailansicht der Fig. 4 erkennen lassen, weist die zur Flachseite des Grundkörpers 56 weisende Fläche des Anlageabschnittes 66 an beiden Schmalseiten jeweils eine Abstufung auf, die den Grundkörper 56 beidseitig seiner kontaktierten Flachseite umfassen und weitgehend spielfrei kontaktieren, so dass die Positionierung des Anlageabschnittes 66 gegenüber dem Grundkörper 56 vorgegeben ist. Mit eingesetzter und festgelegter Verschraubung 68 ist der Gleitabschnitt somit in definierter Weise am Grundkörper 56 der Nabe 36 verankert.

An eine dieser gestuften Schmalseiten des Anlageabschnittes 66 schließt sich der um mehr als 90° abgewinkelte kreisbogenförmige Ausleger 40 an, und zwar vorzugweise in einer Materialstärke, die in etwa mit dem flachen Anlageabschnitt 66 übereinstimmt oder gegenüber dessen Materialstärke etwas geringer ist, so dass die definierte elastische Verformung des Auslegers 40 sichergestellt werden kann, ohne dass dadurch eine Verformung des Anlageabschnittes 66 oder dessen Ablösung vom Grundkörper 56 ausgelöst wird.

Wie es die Figuren 3A bis 4 deutlich erkennen lassen, ist der Ausleger 40 einstückig mit dem Anlageabschnitt 66 ausgebildet, wobei der solchermaßen geformte Gleitabschnitt 38 vorzugsweise aus einem elastischen Kunststoffmaterial oder aus einem geeigneten elastischen Verbundmaterial aus Kunststoff mit eingelagerten Verstärkungsfasern, z.B. aus GfK, CfK o. dgl. Material gefertigt sein kann.

Ein freies Ende 70 des gekrümmten Auslegers 40 kann sinnvollerweise in etwa das Niveau der Kontaktebene zwischen dem Anlageabschnitt 66 und dem Grundkörper 56 erreichen, wodurch der oben erwähnte Kreissegmentwinkel von etwa 180° gegeben ist.

Die schematische Perspektivansicht der Fig. 4 verdeutlicht nochmals den Grundkörper 56 der Nabe 36 der Spannvorrichtung 10 sowie den an einer Flachseite des quaderförmigen Grundkörpers 56 vollflächig anliegenden Anlageabschnitt 66 des Gleitabschnittes 38. An eine der beiden Schmalseiten des Anlageabschnittes 66 schließt sich der gekrümmte Gleitabschnitt 40 an, der an seiner zum Zugmittel 14 weisenden konvexen Außenseite durch die Gleitoberfläche 62 mit der nutartigen Konturierung 64 gebildet ist. Da in der Darstellung der Fig. 4 die den Gleitabschnitt 38 an der Nabe 36 festlegende Verschraubung 68 fehlt (vgl. hierzu die Figuren 3A, 3B und 3C), ist die für diese Verschraubung vorgesehene weitere Durchgangsbohrung 72 erkennbar, die quer zur zuvor erwähnten Bohrung 60 den Grundkörper 56 durchdringt und bis zu dessen Flachseite reicht, an welcher der Anlageabschnitt 66 befestigt ist.

Eine Verformbarkeit 74 des elastisch nachgiebigen Auslegers 40 ist durch die Pfeilrichtung in Fig. 4 verdeutlicht. Aufgrund seiner elastischen Nachgiebigkeit kann der hebelartige Ausleger 40 des Gleitabschnittes 38 gegen das hier nicht gezeigte Zugmittel 14 (vgl. Fig. 1 und Figuren 2A bis 2D) in dessen Leertrum 30 zugestellt werden und solchermaßen auf das Leertrum 30 einwirken, so dass dieses zwischen seinen beiden Umlenkungen, d.h. zwischen den umlaufenden Zahnrädern 22 und 24 vorspannt wird. Bei umlaufendem Zugmittel 14 und dementsprechend eine rückstellende Kraft in Pfeilrichtung 74 auf den Ausleger 40 der Spannvorrichtung 10 ausübendem Leertrum 30 kann sich der hebelartige Ausleger 40 des Gleitabschnittes 38 aufgrund seiner oben erläuterten elastischen Eigenschaften definiert verformen und zumindest geringfügig in Richtung zum Grundkörper 56 und dem Anlageabschnitt 66 ausweichen.

Ein weiteres wichtiges Funktionselement, das ganz wesentlich die Verformungsparameter des elastisch nachgiebigen Auslegers 40 und damit die elastischen Eigenschaften der gesamten Spannvorrichtung 10 beeinflussen kann, ist in den Figuren 2A bis 3D im eingebauten Zustand erkennbar. Dieses durch ein separates, mittels der Verschraubung 58 am Grundkörper 56 montierte und in nachfolgend beschriebener Weise mit dem verformbaren Ausleger 40 zusammenwirkende Federblech 76 gebildete Funktionselement ist in der schematischen Perspektivansicht der Fig. 5 nochmals als Einzelteil verdeutlicht, während es in der Detaildarstellung der Fig. 4 bei noch fehlender Verschraubung 68 noch nicht montiert ist.

Aus Gründen der besseren Übersichtlichkeit ist das in den Figuren 2A bis 2D deutlich erkennbare Federblech 76 dort nicht näher bezeichnet, während es dagegen in den Figuren 3A bis 3D im am Grundkörper 56 der Nabe 36 montierten Zustand deutlich erkennbar und daher in seiner Wirkungsweise dort besser beschreibbar ist. Die Kontur und die einzelnen Funktionsbereiche des Federblechs 76 sind in Fig. 5 erkennbar, während seine Dimensionierung und seine Zusammenwirkung mit dem Ausleger 40 des Gleitabschnittes 38 in den Figuren 3A bis 3D besser zu veranschaulichen sind.

So weist das relativ dünn ausgeführte Federblech 76 eine Hauptfläche 78 auf, die größenmäßig in etwa mit der korrespondierenden Flachseite des Grundkörpers 56 der Nabe 36 übereinstimmt, auf der das Federblech 76 mit seiner flachen Hauptfläche 78 montierbar ist. Die Montagefläche des Federblechs 76 liegt der Fachseite des Grundkörpers 56, an der der Anlageabschnitt 66 des Gleitabschnittes 38 montiert ist, gegenüber. Das Federblech 76 ist mit derselben Verschraubung 68 fest am Grundkörper 56 der Nabe 36 fixiert, mit der an der gegenüberliegenden Flachseite auch der Anlageabschnitt 66 fixiert ist. Zu diesem Zweck ist in der Hauptfläche 78 eine Montagebohrung 80 eingebracht, die größenmäßig sinnvollerweise mit der entsprechend dimensionierten Verschraubung 68 korrespondiert. Diese Montagebohrung ist lediglich in der Fig. 5 erkennbar, weil sich in den Darstellungen der Figuren 3A bis 3D die Verschraubung 68 an ihrem vorgesehenen Einbauort im montierten Zustand befindet.

An die Hauptfläche 78 schließt sich ein U-förmiger Bügel 82 an, der eine zweifach um jeweils 90° abgewinkelte Fortsetzung der Hauptfläche in derselben Materialstärke bildet. Bei auf der oberen Flachseite des Grundkörpers 56 fixierter Hauptfläche 78 ragt der U-förmige Bügel 82 über die Flachseite des Grundkörpers 56 hinaus, so dass er gegenüber der Hauptfläche 78 in gewissem Maße elastisch verformbar ist, und zwar in definierter Zusammenwirkung mit dem elastisch verformbaren Ausleger 40 des Gleitabschnittes 38.

Der U-förmige Bügel 82 weist eine um 90° gegenüber der nicht abgewinkelten Verlängerung 84 der Hauptfläche 78 abgewinkelte Basis 86 auf, an die sich ein nochmals um 90° abgewinkelter Schenkel 88 anschließt, der mitsamt dem ganzen Bügel 82 federnd verformbar ist. Der Schenkel 88 ist nur mit der Basis 86 verbunden und endet ansonsten frei, wie dies in Fig. 5 deutlich erkennbar ist.

Die hier gezeigte Gestaltung mit dem zweifach abgewinkelten U-förmigen Abschnitt, bestehend aus Verlängerung 84, Basis 86 und unterem freien Schenkel 88 kann selbstverständlich auch abgewandelt werden und bspw. einen durchgängigen Radius zwischen der nicht abgewinkelten Verlängerung 84 und dem parallel dazu angeordneten freien Schenkel 88 vorsehen, so dass bei einer solchen Variante die Basis 86 nicht um jeweils 90° gegenüber den Abschnitten 84 und 88 abgewinkelt ist, sondern einen 180°-Kreisbogen beschreibt. Der Effekt einer solchen (hier nicht gezeigten) Gestaltung dürfte sich kaum von der in den Figuren 2A bis 3D und Fig. 5 gezeigten Gestaltungsvariante des Federblechs 76 unterscheiden.

Die Wirkungsweise des Federblechs 76 ist so zu verstehen, dass mit seiner Montage die Elastizität des Gleitabschnittes 38 der Spannvorrichtung 10 noch präziser eingestellt und durch Gestaltung des Federblechs 76 in gewünschter Weise variiert werden kann als ohne ein solches Federblech 76. Bei montiertem Federblech 76 gemäß Fig. 3A ist dieses an der dem Anlageabschnitt 66 des Gleitabschnittes 38 gegenüberliegenden Flachseite des quaderförmigen Grundkörpers 56 der Nabe 36 montiert. Die Befestigung erfolgt mittels der Verschraubung 68, die das Federblech 76 an seiner Montagebohrung 80 (vgl. Fig. 5) durchdringt, durch die weitere Durchgangsbohrung 72 des Grundkörpers 56 (vgl. Fig. 4) geschoben ist und zudem den Anlageabschnitt 66 an einer hier nicht näher gezeigten Bohrung durchdringt, wobei die Verschraubung 68 bspw. mittels aufgeschraubter Gewindemutter und oberseitigem Sechskantkopf befestigt sein kann (vgl. Figuren 3A bis 3C).

Wie es die Fig. 3A verdeutlicht, liegt im nicht verformten Zustand des bogenförmig gekrümmten Auslegers 40 und im nicht verformten Zustand des Federblechs 76 der am freien Ende abgewinkelte Schenkel 88 des Bügels 82 an der Stirnseite des freien Endes 70 des Auslegers 40 an, so dass jede Verformung 74 (vgl. Fig. 4) des Auslegers 40 aufgrund eines gegen die Gleitoberfläche 62 drückenden Zugmittels 14 unmittelbar zu einer elastischen Verformung des Bügels 82 des Federblechs 76 führt und sich über den verlängerten Abschnitt 84 in die am Grundkörper 56 verschraubte und dort flächig anliegende Hauptfläche 78 überträgt.

Sofern eine solche Verformung in Pfeilrichtung 74 (vgl. Fig. 4) ein gewisses Maß überschreitet, kann die Hauptfläche 78 teilweise von der flächigen Anlage am Grundkörper 56 gelöst werden, da sich bei am Schenkel 88 in Pfeilrichtung 74 angreifendem Ausleger 40 der vordere verlängerte Abschnittes 84 der Hauptfläche 78 vom Grundkörper 56 abhebt und sich ganze Abschnitte der Hauptfläche 78 elastisch verformen können, ohne dass sich dabei der vordere Bügel 82 nennenswert in sich verformen muss.

Die elastischen Eigenschaften des Federblechs 76 und damit der gesamten Spannvorrichtung 10 lassen sich durch die verwendete Blechstärke, die Biegsamkeit des verwendeten Blechmaterials sowie zusätzlich durch einen U-förmigen Schlitz 90 beeinflussen, der um die Montagebohrung 80 herum und beabstandet zu dieser angeordnet ist. Dieser U-förmige Schlitz 90 ist durch eine Ausstanzung oder anderweitig eingebrachte schlitzartige Aussparung gebildet, der die Hauptfläche 78 unterbricht und dafür sorgt, dass bei der in der Montagebohrung 80 fixierten Verschraubung 68 zwar der die Montagebohrung 80 unmittelbar umgebende Bereich der Hauptfläche 78 mit der entsprechenden Oberfläche des Grundkörpers 56 in Kontakt bleibt, dass sich aber gleichzeitig die außerhalb des U-förmigen Schlitzes 90 befindlichen Bereiche der Hauptfläche 78 vom Grundkörper 56 abheben können, wenn eine Verformungskraft 74 über das stirnseitige freie Ende 70 des Auslegers 40 auf den Schenkel 88 einwirken.

Die Elastizität und Verformbarkeit der Hauptfläche 78 kann wiederum durch die Gestaltung des U-förmigen Schlitzes 90 in gewissen Ausmaßen beeinflusst werden. Die Fig. 5 lässt einen U-förmigen Schlitz 90 erkennen, dessen beide Schenkelabschnitte 92 in etwa einen Abstand aufweisen, der dem doppelten Durchmesser der Montagebohrung 80 entspricht. Der Abstand der beiden parallelen Schenkelabschnitte 92 des U-förmigen Schlitzes 90 kann zudem in etwa einem Drittel der Breite der Hauptfläche 78 des Federblechs 76 in diesem Bereich entsprechen.

Während der U-förmige Schlitz 90 im Bereich um die Montagebohrung 80 herum in seinem Abstand zum Außendurchmesser der Montagebohrung 80 weitgehend konstant bleibt und einen 180°-Bogen um die Montagebohrung 80 herum beschreibt, erstrecken sich die beiden parallelen Schenkelabschnitte 92 im gezeigten Ausführungsbeispiel relativ weit in Richtung zum stirnseitigen Rand 94 der Hauptfläche 78, was die Elastizität der Hauptfläche 78 bei auf den Schenkel 88 einwirkenden Verformungskräften 74 erhöht. Bei kürzer ausgeführten Schenkelabschnitten 92 wäre die Hauptfläche 78 in sich steifer und könnte einer Krafteinwirkung am Bügel 82 weniger nachgeben.

Aus der beschriebenen Wirkungsweise des Federblechs 76 wird deutlich, dass dieses sinnvollerweise durch ein dünnes Metallblech gebildet ist, das ausreichend steif und gleichzeitig elastisch verformbar ist, ohne zu nachgiebig zu sein, da es den im Betrieb auftretenden Verformungskräften 74 einen ausreichenden Widerstand entgegenzusetzen hat. Geeignete Federbleche, die auch nach längerer Betriebsdauer ihre elastischen Eigenschaften und ihre Steifigkeit nicht verlieren, stehen dem über entsprechende Materialkenntnisse verfügenden Fachmann zur Verfügung. Der Fachmann weiß auch, dass er alternative Materialen für das Federblech 76 verwenden kann, etwa dünne CfK-Streifen, welche die gewünschten Festigkeits- und Elastizitätsparameter aufweisen.

Eine weitere vorteilhafte Option, die technisch jedoch nicht notwendig wäre, ist durch eine optische Anzeige 96 der Verformung des Federblechs 76 gegeben, die durch den im Einbau innerhalb des Zugmittelantriebes 12 durch das Leertrum 30 in Verformungsrichtung 74 gedrückten Ausleger 40 des Gleitabschnittes 38 ausgelöst wird. Zu diesem Zweck befindet sich an geeigneter Stelle des Bügels 82 ein abgewinkeltes Zeigerblech 98, das wahlweise gemäß Fig. 3A und Fig. 3B an die obere Verlängerung 84 der Hauptfläche 78 geschraubt sein kann. Ein gegenüber einem parallel zur Verlängerung 84 ausgerichteten und dort verschraubten oberen Streifen abgewinkelter Pfeilabschnitt 100 des Zeigerblechs 98 weist mit seiner Spitze auf eine Strichmarkierung 102, die sich an einer seitlichen Oberfläche des Grundkörpers 56 der Nabe 36 befindet. An dieser seitlichen Oberfläche mit der Strichmarkierung (vgl. Fig. 3B) befindet sich zudem die oben schon erwähnte Durchgangsbohrung 60, über die der Grundkörper 56 am Montagesockel 54 verschraubt werden kann.

Bei sich verformendem Ausleger 40 des Gleitabschnittes 38 drückt das freie Ende 70 des Auslegers 40 auf die Unterseite des Schenkels 88 des Bügels 82, der dadurch mitsamt dem sich verformenden vorderen Abschnitt der Hauptfläche 78 ausgelenkt wird. Die Auslenkung des Bügels 82, an dessen oberen verlängertem Abschnitt 84 der Hauptfläche 78 das Zeigerblech 98 der optischen Anzeige 96 verankert ist (vgl. Fig. 3B), wird durch die Verschiebung des Pfeilabschnittes 100 gegenüber der Strichmarkierung 102 am Grundkörper 56 angezeigt und ablesbar gemacht. Wenn die Spitze des Pfeilabschnittes 100 des Zeigerblechs 98 exakt auf die Strichmarkierung 102 hinzeigt, liegt keine Verformung vor, während jegliche Verschiebung des Pfeilabschnittes 100 in Richtung zur oberen Deckseite des Grundkörpers 56 mit dem darauf montierten Federblech 76 eine Verformung des Auslegers 40 und damit eine Krafteinwirkung in Pfeilrichtung 74 (vgl. Fig. 4) aufgrund des dagegen drückenden Leertrums 30 des Zugmittelantriebes 12 anzeigt.

Die Figuren 3C und 3D lassen eine technisch gleichwertige Alternativgestaltung der optischen Anzeige 96 erkennen. Dort befindet sich der Pfeilabschnitt 100 an einem Zeigerblech 98, das unmittelbar seitlich aus dem unteren Schenkelblech 88 des Bügels 82 herausragt und durch mehrfache Abkantung in gleicher Weise wie die in Fig. 3B gezeigte Variante auf die Strichmarkierung 102 am Grundkörper 56 hinweist. Die Wirkungsweise dieser Variante der optischen Anzeige 96 unterscheidet sich nicht von der zuvor beschriebenen ersten Variante gemäß Fig. 3B.

Es muss an dieser Stelle nicht darauf hingewiesen werden, dass die meisten der oben und anhand der Figuren 3A bis 3B sowie der Figuren 4 und 5 erläuterten Komponenten auch in den Darstellungen der Figuren 2A bis 2D erkennbar sind. Viele dieser Komponenten sind dort jedoch nicht gesondert gekennzeichnet, um die den Zugmittelantrieb 12 verdeutlichenden Zeichnungen nicht zu überfrachten.

Folgendes sei als ergänzender Hinweis zu den vorstehenden Ausführungen gegeben. Wenn auch im Zusammenhang mit den in den Figuren gezeigten Ausführungsvarianten der Spannvorrichtung 10 im Zugmittelantrieb 12 und den vorstehenden Beschreibungen oftmals oder auch generell von als schematisch bezeichneten Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen von Teilen der Spannvorrichtung 10, deren Einzelheiten oder anderer gezeichneter Elemente in irgendeiner Weise in seinem Verständnis beeinträchtigt wäre. Die Figuren ermöglichen es dem Fachmann als Leser vielmehr, anhand des konkreter erläuterten Aufbaus der erfindungsgemäßen Spannvorrichtung 10 ein besseres Verständnis für den in den Ansprüchen sowie im allgemeinen Teil der Beschreibung zumindest hinsichtlich einiger Aspekte allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Spannvorrichtung
12 Zugmittelantrieb
14 Zugmittel
16 Maschinenumgebung
18 Getränkeabfüllmaschine, Verpackungsmaschine, Getränkeabfüll- und/oder Verpackungsmaschine
20 Kette, Rollenkette
22 Zahnrad, Antriebszahnrad
24 Zahnrad, nicht angetriebenes Zahnrad
26 Zugtrum
28 Antriebsrichtung, Zugspannung
30 Leertrum
32 Rücklaufrichtung
34 Rahmenabschnitt, Rahmenbauteil
36 Nabe
38 Gleitabschnitt, elastisch nachgiebiger Gleitabschnitt, hebelartiger Gleitabschnitt
40 Ausleger, gekrümmter Ausleger
42 Riemen
44 Umlenkrolle, angetriebene Umlenkrolle
46 Umlenkrolle, nicht angetriebene Umlenkrolle
48 Welle, Antriebswelle
50 Welle, Abtriebswelle
52 Strebe, horizontale Strebe
54 Sockel, Montagesockel
56 Grundkörper, quaderförmiger Grundkörper
58 Schraube, Gewindeschraube
60 Bohrung, Durchgangsbohrung
62 Gleitoberfläche
64 Konturierung, nutartige Konturierung
66 Anlageabschnitt
68 Verschraubung
70 freies Ende
72 weitere Bohrung, weitere Durchgangsbohrung
74 Verformbarkeit, Verformungsrichtung
76 Federblech
78 Hauptfläche
80 Montagebohrung
82 Bügel, U-förmiger Bügel
84 Verlängerung, verlängerte Hauptfläche, verlängerter Abschnitt
86 Basis, Basisabschnitt
88 Schenkel, freier Schenkel
90 Schlitz, U-förmiger Schlitz
92 Schenkelabschnitt, Schenkelabschnitt des U-förmigen Schlitzes
94 Rand, stirnseitiger Rand der Hauptfläche
96 optische Anzeige, Verformungsanzeige
98 Zeigerblech, abgewinkeltes Zeigerblech
100 Pfeilabschnitt
102 Strichmarkierung

## Patentansprüche

1. Spannvorrichtung (10) für einen umlaufenden Zugmittelantrieb (12) mit mindestens einem über Umlenkungen geführten Zugmittel (14), insbesondere für einen Ketten- oder Riemenantrieb, welcher Zugmittelantrieb (12) Bestandteil einer Förder- oder Antriebseinheit innerhalb einer Maschinenumgebung (16), insbesondere einer Produktionsmaschine, einer Förder- oder Handhabungsmaschine ist,
wobei die Spannvorrichtung (10) eine an einem ortsfesten Bauteil der Maschinenumgebung (16) im Bereich eines Leertrumabschnittes (30) des umlaufenden Zugmittels (14) verankerte Nabe (36) umfasst, an der ein elastisch nachgiebiger Gleitabschnitt (38) hebelartig befestigt ist, der mit dem Zugmittel (14) in dessen Leertrum (30) zusammenwirkt und dieses zwischen zwei Umlenkungen vorspannt, wobei der Gleitabschnitt (38) durch einen konvex gekrümmten Ausleger (40) gebildet ist, dessen konvex gekrümmte Seite dem Leertrum (30) des Zugmittels (14) zugewandt ist und dort anliegt, und **dadurch gekennzeichnet, dass** der Ausleger (40) an einem elastisch verformbaren Abstützelement abgestützt ist, das beabstandet vom Ausleger (40) an der Nabe (36) verankert ist, und welchem Abstützelement (38) eine optische Anzeige (96) zugeordnet ist, welche den jeweiligen Verformungsgrad des Auslegers (40) und/oder des Abstützelementes gegenüber der am ortsfesten Bauteil verankerten Nabe (36) anzeigt und ablesen lässt.

2. Spannvorrichtung nach Anspruch 1, bei welcher der Ausleger (40) durch ein elastisch verformbares Material gebildet oder gefertigt ist.

3. Spannvorrichtung nach Anspruch 1 oder 2, bei welcher der Ausleger (40) einstückig mit der Nabe (36) verbunden oder ein stofflich integraler Bestandteil der Nabe (36) ist.

4. Spannvorrichtung nach einem der Ansprüche 1 bis 3, bei welcher das Abstützelement durch ein Federblech (76) gebildet ist, das an der Nabe (36) verankert ist und gegen das sich der Ausleger (40) abstützt.

5. Spannvorrichtung nach einem der Ansprüche 1 bis 4, bei welcher das Abstützelement einen U-förmigen federnden Abschnitt oder Bügel (82) aufweist, an dem sich der Ausleger (40) abstützt.

6. Getränkeabfüll- und/oder Verpackungsmaschine (18), die wenigstens einen umlaufenden Zugmittelantrieb (12) mit mindestens einem über Umlenkungen geführten Zugmittel (14), insbesondere einen Ketten- oder Riemenantrieb für eine Förder- oder Antriebseinheit innerhalb der Abfüll- und/oder Verpackungsmaschine (18) umfasst,
welchem Zugmittelantrieb (12) in einem zwischen zwei Umlenkungen verlaufenden Leertrumabschnitt (30) des umlaufenden Zugmittels (14) mindestens eine Spannvorrichtung (10) zugeordnet ist, die eine an einem ortsfesten Bauteil der Getränkeabfüll- und/oder Verpackungsmaschine (18) verankerte Nabe (36) umfasst, an der ein elastisch nachgiebiger Gleitabschnitt (38) hebelartig befestigt ist, der mit dem Zugmittel (14) in dessen Leertrum (30) zusammenwirkt und dieses zwischen den zwei Umlenkungen vorspannt,
wobei der Gleitabschnitt (38) der mindestens einen Spannvorrichtung (10) durch einen konvex gekrümmten Ausleger (40) gebildet ist, dessen konvex gekrümmte Seite dem Leertrum (30) des Zugmittels (14) zugewandt ist und dort anliegt, und **dadurch gekennzeichnet, dass** der Ausleger (40) an einem elastisch verformbaren Abstützelement abgestützt ist, das beabstandet vom Ausleger (40) an der Nabe (36) verankert ist, und welchem Abstützelement (38) eine optische Anzeige (96) zugeordnet ist, welche den jeweiligen Verformungsgrad des Auslegers (40) und/oder des Abstützelementes gegenüber der am ortsfesten Bauteil verankerten Nabe (36) anzeigt und ablesen lässt.

7. Maschine nach Anspruch 6, die mit einer Spannvorrichtung (10) gemäß einem der Ansprüche 1 bis 5 ausgestattet ist, die einem Leertrum (30) eines umlaufenden Zugmittels (14) eines Zugmittelantriebes (12) zugeordnet ist.

8. Maschine nach Anspruch 6 oder 7, bei welcher der Ausleger (40) des Gleitabschnittes (38) durch ein elastisch verformbares Material gebildet oder gefertigt ist, wobei der Ausleger (40) insbesondere einstückig mit der Nabe (36) verbunden oder ein stofflich integraler Bestandteil der Nabe (36) ist.

9. Maschine nach einem der Ansprüche 6 bis 8, bei welcher das Abstützelement durch ein Federblech (76) gebildet ist, das an der Nabe (36) verankert ist und gegen das sich der Ausleger (40) abstützt.

10. Maschine nach einem der Ansprüche 6 bis 9, bei welcher das Abstützelement einen U-förmigen federnden Abschnitt oder Bügel (82) aufweist, an dem sich der Ausleger (40) abstützt.

## Claims

1. A tensioning device (10) for a revolving traction mechanism drive (12) with at least one traction mechanism (14) guided via deflection pulleys, in particular, for a chain drive or belt drive, which traction mechanism drive (12) is a component of a conveyor unit or drive unit within a machine environment (16), in particular, within a production machine, a conveying machine, or a handling machine,
wherein the tensioning device (10) comprises a hub (36), which is anchored to a stationary component of the machine environment (16) in the region of a slack strand section (30) of the revolving traction mechanism (14), to which hub (36) an elastically yielding sliding section (38) is attached in a lever-like manner, which sliding section (38) interacts with the traction mechanism (14) in its slack strand (30) and pretensions it between two deflection pulleys, wherein the sliding section (38) is formed by a convexly curved cantilever (40), of which the convexly curved side faces toward and is in contact with the slack strand (30) of the traction mechanism (14), and
**characterised in that** the cantilever (40) is supported on an elastically deformable support element, which is anchored to the hub (36) in a manner spaced apart from the cantilever (40), and to which support element (38) an optical indicator (96) is assigned, which indicates and allows to read the particular degree of deformation of the cantilever (40) and/or of the support element relative to the hub (36), which is anchored to the stationary component.

2. The tensioning device according to claim 1, in which the cantilever (40) is formed or manufactured from an elastically deformable material.

3. The tensioning device according to claim 1 or 2, in which the cantilever (40) is connected to the hub (36) in one piece or is a materially integral component of the hub (36).

4. The tensioning device according to one of the claims 1 to 3, in which the support element is formed by a spring plate (76), which is anchored to the hub (36) and on which the cantilever (40) is supported.

5. The tensioning device according to one of the claims 1 to 4, in which the support element has a U-shaped resilient section or bracket (82) on which the cantilever (40) is supported.

6. A beverage filling machine and/or packaging machine (18), which comprises at least one revolving traction mechanism drive (12) with at least one traction mechanism (14) guided via deflection pulleys, in particular, a chain drive or belt drive for a conveyor unit or drive unit within the filling machine and/or packaging machine (18),
to which traction mechanism drive (12) at least one tensioning device (10) is assigned in a slack strand section (30) of the revolving traction mechanism (14) extending between two deflection pulleys, which tensioning device (10) comprises a hub (36) anchored to a stationary component of the beverage filling machine and/or packaging machine (18), to which hub (36) an elastically yielding sliding section (38) is attached in a lever-like manner, which sliding section (38) interacts with the traction mechanism (14) in its slack strand (30) and pretensions it between the two deflection pulleys, wherein the sliding section (38) of the at least one tensioning device (10) is formed by a convexly curved cantilever (40), of which the convexly curved side faces toward and is in contact with the slack strand (30) of the traction mechanism (14), and
**characterised in that** the cantilever (40) is supported on an elastically deformable support element, which is anchored to the hub (36) in a manner spaced apart from the cantilever (40), and to which support element (38) an optical indicator (96) is assigned, which indicates and allows to read the particular degree of deformation of the cantilever (40) and/or of the support element relative to the hub (36), which is anchored to the stationary component.

7. The machine according to claim 6, which is equipped with a tensioning device (10) according to one of the claims 1 to 5, which tensioning device (10) is assigned to a slack strand (30) of a revolving traction mechanism (14) of a traction mechanism drive.

8. The machine according to claim 6 or 7, in which the cantilever (40) of the sliding section (38) is formed or manufactured from an elastically deformable material, wherein the cantilever (40) is, in particular, connected to the hub (36) in one piece or is a materially integral component of the hub (36).

9. The machine according to one of the claims 6 to 8, in which the support element is formed by a spring plate (76), which is anchored to the hub (36) and on which the cantilever (40) is supported.

10. The machine according to one of the claims 6 to 9, in which the support element has a U-shaped resilient section or bracket (82), on which the cantilever (40) is supported.

## Revendications

1. Dispositif de tension (10) pour un entraînement de moyen de traction (12) circulant comprenant au moins un moyen de traction (14) guidé par des dispositifs de renvoi, en particulier pour un entraînement par chaîne ou par courroie, lequel entraînement de moyen de traction (12) fait partie d'une unité de transport ou d'entraînement dans un environnement de machine (16), en particulier une machine de production, une machine de transport ou de manipulation,
dans lequel le dispositif de tension (10) comprend un moyeu (36) qui est ancré sur un composant fixe de l'environnement de machine (16) au niveau d'une section de brin mou (30) du moyen de traction (14) circulant et auquel est fixé à la manière d'un levier une section coulissante (38) élastiquement flexible qui agit de concert avec le moyen de traction (14) dans son brin mou (30) et précontraint celui-ci entre deux dispositifs de renvoi, dans lequel la section coulissante (38) est formée par un porte-à-faux (40) incurvé de manière convexe dont le côté incurvé de manière convexe montre en direction du brin mou (30) du moyen de traction (14) et y est en appui, et
**caractérisé par le fait que** le porte-à-faux (40) est appuyé sur un élément d'appui élastiquement déformable qui est ancré sur le moyeu (36) à distance du porte-à-faux (40), et auquel élément d'appui (38) est associé un affichage optique (96) qui indique et permet de lire le degré respectif de déformation du porte-à-faux (40) et/ou de l'élément d'appui par rapport au moyeu (36) ancré sur le composant fixe.

2. Dispositif de tension selon la revendication 1, dans lequel le porte-à-faux (40) est formé ou fabriqué par un matériau élastiquement déformable.

3. Dispositif de tension selon la revendication 1 ou 2, dans lequel le porte-à-faux (40) est relié en une seule pièce au moyeu (36) ou est une partie matériellement intégrante du moyeu (36).

4. Dispositif de tension selon l'une quelconque des revendications 1 à 3, dans lequel l'élément d'appui est formé par une tôle souple (76) qui est ancrée sur le moyeu (36) et contre laquelle le porte-à-faux (40) prend appui.

5. Dispositif de tension selon l'une quelconque des revendications 1 à 4, dans lequel l'élément d'appui présente un(e) section ou étrier (82) en U formant ressort sur laquelle/lequel le porte-à-faux (40) prend appui.

6. Machine de mise en bouteille de boissons et/ou d'emballage (18) qui comprend au moins un entraînement de moyen de traction (12) circulant comprenant au moins un moyen de traction (14) guidé par des dispositifs de renvoi, en particulier un entraînement par chaîne ou par courroie pour une unité de transport ou d'entraînement à l'intérieur de la machine de mise en bouteille et/ou d'emballage (18), au moins un dispositif de tension (10) est associé à l'entraînement de moyen de traction (12) dans une section de brin mou (30) du moyen de traction (14) circulant, qui s'étend entre deux dispositifs de renvoi, lequel dispositif de tension présente un moyeu (36) qui est ancré sur un composant fixe de la machine de mise en bouteille de boissons et/ou d'emballage (18) et auquel est fixé à la manière d'un levier une section coulissante (38) élastiquement flexible qui agit de concert avec le moyen de traction (14) dans son brin mou (30) et précontraint celui-ci entre les deux dispositifs de renvoi, dans lequel la section coulissante (38) dudit au moins un dispositif de tension (10) est formée par un porte-à-faux (40) incurvé de manière convexe dont le côté incurvé de manière convexe montre en direction du brin mou (30) du moyen de traction (14) et y est en appui, et
**caractérisé par le fait que** le porte-à-faux (40) est appuyé sur un élément d'appui élastiquement déformable qui est ancré sur le moyeu (36) à distance du porte-à-faux (40), et auquel élément d'appui (38) est associé un affichage optique (96) qui indique et permet de lire le degré respectif de déformation du porte-à-faux (40) et/ou de l'élément d'appui par rapport au moyeu (36) ancré sur le composant fixe.

7. Machine selon la revendication 6, qui est équipée d'un dispositif de tension (10) selon l'une quelconque des revendications 1 à 5, qui est associé à un brin mou (30) d'un moyen de traction (14) circulant d'un entraînement de moyen de traction (12).

8. Machine selon la revendication 6 ou 7, dans laquelle le porte-à-faux (40) de la section coulissante (38) est formé ou fabriqué par un matériau élastiquement déformable, dans laquelle le porte-à-faux (40), en particulier, est relié en une seule pièce au moyeu (36) ou est une partie matériellement intégrante du moyeu (36).

9. Machine selon l'une quelconque des revendications 6 à 8, dans laquelle l'élément d'appui est formé par une tôle souple (76) qui est ancrée sur le moyeu (36) et contre laquelle le porte-à-faux (40) prend appui.

10. Machine selon l'une quelconque des revendications 6 à 9, dans laquelle l'élément d'appui présente un(e) section ou étrier (82) en U formant ressort sur laquelle/lequel le porte-à-faux (40) prend appui.
